(19) Europäisches Patentamt
European Patent Office
Office européen des brevets

(11) **EP 1 880 921 A2**

(12) **EUROPEAN PATENT APPLICATION**

(43) Date of publication:
**23.01.2008 Bulletin 2008/04**

(51) Int Cl.:
***B62D 5/04*** (2006.01)

(21) Application number: **07013915.9**

(22) Date of filing: **16.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **19.07.2006 JP 2006196653**
**05.04.2007 JP 2007099416**

(71) Applicant: **NSK Ltd.**
**Tokyo 141-8560 (JP)**

(72) Inventors:
• **Endo, Shuji**
**Maebashi-shi**
**Gunma 371-8527 (JP)**

• **Aoki, Yuho**
**Maebashi-shi**
**Gunma 371-8527 (JP)**
• **Reungwetwattana, Apiwat**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Controller for electric power steering apparatus**

(57)    A computed SAT value SATa is computed, and an estimated SAT value SATb is estimated from lateral force. A grip loss level "g" is computed from difference between the computed self aligning torque value SATa and the estimated SAT value SATb. Torque correction value $\Delta T$ which becomes greater with an increase in grip loss level "g" and an increase in angular speed $\omega$ is set in accordance with the grip loss level "g" and the angular speed $\omega$ of an electric motor 12 serving as corresponding steering angular speed. The corresponding torque correction value $\Delta T$ is subtracted from the current command value Itv responsive to the steering torque T and the vehicle speed V, thereby correcting the current command value Itv. The thus-corrected current command value Itv is taken as a steering assist command value Im, and the electric motor 12 is driven based on the steering assist command value.

*FIG. 1*

EP 1 880 921 A2

**Description**

BACKGROUND OF THE INVENTION

1. Field of the Invention

The present invention relates to a controller for an electric power steering apparatus which imparts steering assist force to a steering mechanism of a vehicle by a motor, and particularly to a controller for an electric power steering apparatus capable of stabilizing the behavior of a vehicle even when grips of tires have been lost.

2. Description of Related Art

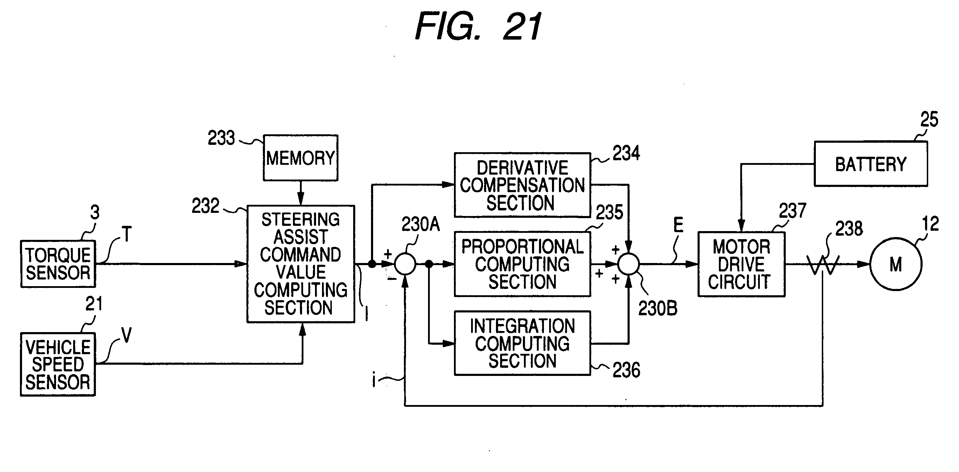

An electric power steering system-where a motor is driven in response to steering torque generated as a result of a driver operating a steering wheel, to thus impart steering assist power to a steering mechanism-has hitherto become prevalent as a steering system.
Moreover, in relation to such an electric power steering system, there have also been proposed an electric power steering system which determines self aligning torque-which acts so as to return wheels attached to a vehicle to neutral positions- and uses the thus-determined torque for steering control in order to enhance steering performance or stabilize the behavior of the vehicle at the time of cornering; an electric power steering system which further controls steering in consideration of the grip status of tires; or the like.
A method using; e.g., a deviation of an actual yaw rate from a standard yaw rate, as a value equivalent to the grip status of tires has already been proposed as a method for computing the grip status the tires (see, e.g., Japanese Patent Unexamined Publication JP-A-2006-264392).
However, as mentioned previously, when the deviation of the actual yaw rate from the standard yaw rate is used as a value equivalent to the grip status, the deviation of the yaw rate represents the grip status, but a comparatively large error exists between the grip status represented by the deviation and an actual grip status.
Moreover, since the standard yaw rate uses a characteristic achieved in a steady traveling state, difficulty is encountered in acquiring an unerring grip status when dynamic transient response; specifically, quick steering, has been performed. Further, since the yaw rate is susceptible to the inertia of the vehicle, and the like, response of the yaw rate is slow. For this reason, even in this case, difficulty is encountered in acquiring an unerring grip status when, specifically, quick steering has been performed.
Therefore, when the grip status has been estimated by use of the deviation of the yaw rate as mentioned above and when steering has been controlled through use of the thus-estimated grip status, an error existing between the actual grip status and the estimated grip status is great. Hence, in some cases, there is a possibility of grips being lost or the behavior of the vehicle becoming unstable as a result of steering having been performed in a direction where steering is increased in excess of an allowable range responsive to the actual grip status.
An electric power steering apparatus is controlled by a control unit, which is principally constituted of a CPU (including an MPU and an MCU), and general functions executed by programs in the CPU are shown in Fig. 21.
Functions and operation of the control unit are described by reference to Fig. 21. The steering torque T detected by the torque sensor 3 is input to a steering assist command value computing section 232, and the vehicle speed V detected by the vehicle speed sensor 21 is also input to the steering assist command value computing section 232. From the input steering torque T and the vehicle speed V, the steering assist command value computing section 232 determines a steering assist command value I which is a control target value of an electric current supplied to the motor 20 by reference to an assist map stored in memory 233. The steering assist command value I is input to a subtraction section 230A through summation, as well as being input to a derivative compensation section 234 of a feedforward system in order to improve response speed. A deviation (I-i) of the subtraction section 230A is input to a proportional computing section 235, as well as being input to an integration section 236 intended for enhancing a characteristic of a feedback system. A proportional output from the proportional computing section 235 is input to an addition section 230B. An output from the derivative compensation section 234 and an output from the integral compensation section 236 are also input to the addition section 230B through summation. A current control value E that is a result of addition performed by the addition section 230B is input as a motor drive signal to a motor drive circuit 237. The battery 25 supplies power to the motor drive circuit 237, and a motor current detection section 238 detects a motor current value "i" of the motor 12. The motor current value "i" is input, in a subtractive manner, to the subtraction section 230A and subjected to feedback.
In such an electric power steering system, self aligning torque (hereinafter abbreviated simply as "SAT")-which is torque used for restoring wheels attached to the vehicle to neutral positions-is determined and used for steering control in order to enhance steering performance or make the behavior of the vehicle stable at cornering. A power steering system described in, e.g., Japanese Patent Unexamined Publication JP-A-2002-369565, computes inertia force and static friction of a motor beforehand; inputs rotational angular speed of the motor, rotational angular acceleration of the motor, a steering signal, and auxiliary steering force, to thus determine an SAT value; and subjects a steering assist command value to feedback through a feedback filter in accordance with a determined SAT value, thereby enhancing steering performance and steering feeling.

Herein, a controller described in Japanese Patent Unexamined Publication JP-A-62-116355 is available as a controller which utilizes SAT and stabilizes the behavior of a vehicle even when grips of tires have been lost. In view of a relationship between SAT and a slip angle of side force (hereinafter often taken as "lateral force"), the controller of JP-A-62-116355 differentiates SAT and lateral force with respect to time and determines the sign of a derivative value, thereby detecting the limit of cornering and stabilizing the behavior of the vehicle. An apparatus described in Japanese Patent Unexamined Publication JP-A-2005-88648 detects steering torque exerted on a steering system; estimates SAT arising in front wheels from the detected steering torque; estimates side force exerted on the front wheels from lateral acceleration and a yaw rate; estimates the degree of grip of the front wheels from variations in SAT responsive to side force; determines whether or not the degree of grip is smaller than an over steering start threshold value; and controls a transmission ratio in response to the state of the vehicle when the degree of grip is smaller than an oversteering start threshold value.

In addition, an ESP (Electronic Stability Program), VSC (Vehicle Stability Control), and the like, control brake or driving of wheels by the engine, thereby controlling the behavior of the vehicle.

However, the controller of JP-A-62-116355 differentiates SAT and lateral force in order to determine whether or not the limit of cornering is reached. Since differential operation is generally susceptible to noise, or the like, a problem of worsening of the accuracy of determination arises.

The apparatus of JP-A-2005-88648 steering wheels a transmission ratio and a steering angle as command values and therefor encounters a problem of a necessity for a VGRS (Variable Gear Ratio System) mechanism. Moreover, an active countersteering angle command value is computed, thereby avoiding unnecessary countersteering. Thus, the behavior of the vehicle is made stable before the limit of grips is reached. There exists a problem of control elements undergoing complication.

Further, a vehicle motion controller, such as ESC (Electronic Stability Control), VSC, or the like, of JP-A-2005-88648 is primarily a braking force/diving force controller. Yaw moment required to stabilize the behavior of a vehicle is generated from a difference in braking forces applied to right and left wheels and a difference in driving forces applied to the same. Hence, when an attempt is made to start control after grips have been significantly lost, a great braking force difference and a great driving force difference are required. In addition, it may also be the case where the behavior of the vehicle cannot be stabilized as a result of a failure to acquire required yaw moment.

SUMMARY OF THE INVENTION

In view of the above, one object of the present invention is to provide a controller for an electric power steering apparatus capable of stabilizing the behavior of a vehicle without involvement of grip loss responsive to the grip status of the vehicle.

Further, another object of the present invention is to provide an electric power steering system which can detect loss of grips of tires by a simple configuration by determining the grip loss level in terms of a relationship between SAT and lateral force and which corrects a current command value by computing corrected steering torque from the detected grip loss level, to thus stabilize the behavior of the vehicle at all times.

According to a first aspect of the invention, there is provided a controller for an electric power steering apparatus including:

a steering torque detection unit that detects steering torque input into a steering mechanism of a vehicle, and
a steering assist command value computing unit that computes a steering assist command value from the steering torque, wherein
the controller drives a motor imparting assist force to the steering mechanism based in accordance with the steering assist command value, and
the steering assist command value computing unit includes:

a steering angular speed detection unit that detects steering angular speed of a steering wheel;
a grip loss level detection unit that detects a grip loss level representing amount of grip loss of tires;
a current command value computing unit that computes a current command value for the motor from the steering torque;
a correction unit that corrects the computed current command value from the detected steering angular speed and the detected grip loss level so as to make thus corrected current command value as the steering assist command value.

According to a second aspect of the invention, as set forth in the first aspect of the invention, it is adaptable that the correction unit corrects the current command value in such a way that:

the steering assist command value becomes smaller as the grip loss level and the steering angular speed become greater.

According to a third aspect of the invention, as set forth in the first aspect of the invention, it is adaptable that the correction unit performs:

computing a correction value for correcting the current command value in accordance with the grip loss level;
multiplying thus computed correction value by the steering angular speed;
subtracting thus obtainedmultiplication from the current command value; and
outputting thus subtracted value as the steering assist command value.

According to a fourth aspect of the invention, as set forth in the first aspect of the invention, it is adaptable that

a grip loss coefficient is set to be smaller as the grip loss level becomes greater,
an angular speed coefficient is set to be smaller as the steering angular speed becomes greater,
the correction unit performs:

multiplying the grip loss coefficient by the angular speed coefficient to thus compute a correction coefficient;
multiplying the correction coefficient by the current command value; and
outputting thus multiplied value as the steering assist command value.

According to a fifth aspect of the invention, it is adaptable that the controller for the electric power steering apparatus as set forth in the first aspect of the invention further including:

steering direction determination unit that determines whether or not operation of the steering wheel is turning further operation or returning operation, wherein,
when the steering direction determination unit has determined that the operation is turning further operation, the correction unit corrects the current command value in such a way that the steering assist command value becomes smaller when compared with a case where the operation is determined to be returning operation.

According to a sixth aspect of the invention, as set forth in the first aspect of the invention, it is adaptable that

the steering mechanism includes a rack connected to a tie rod which steers a wheel; and
the grip loss level detection unit includes

a self alignment torque (SAT) computing section that computes external force arising in the rack, as a self aligning torque computed value;
an SAT estimation section that estimates self aligning torque generated on a road surface from a vehicle motion model as an estimated self aligning torque value; and
a grip loss level detection section that computes the grip loss level from a deviation between the computed self-aligned torque value and the estimated self aligning torque value.

According to a seventh aspect of the invention, as set forth in the first aspect of the invention, it is adaptable that

the steering mechanism includes a rack connected to a tie rod which steers a wheel; and
the grip loss level detection unit includes:

a self alignment torque (SAT) computing section that computes external force arising in the rack as a self aligning torque computed value;
a lateral force detection section that detects lateral force acting on the vehicle; and
a grip loss level detection section that detects the grip loss level from the computed self aligning torque value and the detected lateral force.

According to an eighth aspect of the invention, it is preferable that the controller for the electric power steering apparatus as set forth in the sixth aspect of the invention, further including:

a vehicle speed detection unit that detects a vehicle speed; and
a steering angle detection unit that detects a steering angle of the steering wheel, wherein
the SAT estimation section substitutes the detected vehicle speed and the detected steering angle into the vehicle motion model, to thus estimate the estimated self-aligning value.

According to a ninth aspect of the invention, there is provided an electric power steering system, which computes a current command value in accordance with steering torque of a vehicle and controls a motor imparting assist force for assisting steering operation based on the current command value, the electric power steering system including:

a self alignment torque (SAT) detection section that detects external force arising in a rack shaft of the vehicle as a self aligning torque value;
a SAT estimation section that estimates self aligning torque which is generated on a road surface from a vehicle model;
a grip loss level detection section that detects a grip loss level representing degree of grip loss of tires from the detected self aligning torque value and the estimated self aligning torque value; and
a corrected steering torque computing section that computes corrected steering torque from the grip loss level so that the current command value is corrected by the corrected steering torque.

According to a tenth aspect of the invention, there is provided an electric power steering system, which computes a current command value in accordance with steering torque of a vehicle and controls a motor imparting assist force for assisting steering operation based on the current command value, the electric power steering system including:

a self alignment torque (SAT) detection section that detects external force arising in a rack shaft of the vehicle as a self aligning torque value;
a lateral force detection unit that detects lateral force of the vehicle;
a grip loss level detection section that detects a grip loss level representing degree of grip loss of tires from the detected self aligning torque value and the detected lateral force; and
a corrected steering torque computing section that computes corrected steering torque from the detected grip loss level so that the current command value is corrected by the corrected steering torque.

According to an eleventh aspect of the invention, as set forth in the tenth aspect of the invention, it is adaptable that the lateral force detection unit detects the lateral force at a hub unit which supports a wheel of the vehicle.
According to a twelfth aspect of the invention, as set forth in the tenth aspect of the invention, it is adaptable that the lateral force detection unit detects the lateral force from a yaw rate and lateral acceleration of the vehicle.
According to thirteenth and fourteenth aspects of the invention, as set forth in the ninth and tenth aspects of the invention, it is adaptable that the corrected steering torque is output so as to urge steering of the steering wheel in a direction where the grips of the tires are recovered.
According to fifteenth and sixteenth aspects of the invention, as set forth in the ninth and tenth aspects of the invention, it is adaptable that the corrected steering torque computing section compares the grip loss level with a predetermined value, and outputs the corrected steering torque.
According to seventeenth and eighteenth aspects of the invention, as set forth in the ninth and tenth aspects of the invention, it is adaptable that the grip loss level and the corrected steering torque have a proportional relationship.
According to nineteenth and twentieth aspects of the invention, as set forth in the ninth and tenth aspects of the invention, it is adaptable that the corrected steering torque is added to the current command value.
According to twenty-first and twenty-second aspects of the invention; as set forth in the ninth and tenth aspects of the invention, it is adaptable that a corrected steering torque gain is computed from the grip loss level, and the corrected steering torque gain is multiplied by the current command value.
The controller for the electric power steering apparatus, according to the first through eighth aspects of the present invention, corrects the current command value of the motor computed from the steering torque is corrected in accordance with the grip loss level of the tires and the steering angular speed of the steeringwheel, and the motor is driven in accordance with the thus-corrected steering assist command value. Therefore, steering assist force taking into account the grip loss level and the steering angular speed can be imparted, thereby preventing occurrence of grip loss, which would otherwise be caused by steering operation. Thus, the behavior of the vehicle can be stabilized.
Particularly, in the controller for the electric power steering apparatus defined in the fifth aspect of the invention, the steering direction determination unit determines whether operation of the steering wheel is turning further operation or returning operation. When the operation is determined to be a turning further operation, a steering assist command value is made smaller as compared with the case where the operation of the steering wheel is determined to be returning operation.
Hence, the steering assist force is made small at the time of performing turning further operation, there is difficulty in operation of turning further operation. On contrary, when the operation of the steering wheel is the returning operation, sufficient steering assist force is imparted, thereby facilitating the returning operation.

The controller for the electric power steering apparatus defined in the sixth through eighth aspects of the invention, computes a grip loss level from the self aligning torque that exhibits superior response to a change in grip loss level. Hence, the grip loss level can be detected with high accuracy.

Further, the electric power steering system according to the ninth through twenty-second aspects of the present invention can detect the loss of grips of tires with a simple configuration by comparing an SAT value detected from an equation of motion of a steering system and an SAT value estimated from lateral force (or lateral force or vehicle speed and a steering angle); and stabilize the behavior of a vehicle at all times by determining the state of the vehicle from the detected grip loss level even when the grips of the tires have been lost, computing corrected steering torque so as to urge steering in the direction where the grips are recovered, and producing an output when the grip loss level has come to a predetermined level or more, thereby correcting a current command value.

In the present invention, significant loss of grips of tires is determined by the grip loss level, and hence the determination is characterized as being less susceptible to noise included in SAT or lateral force.

BRIEF DESCRIPTION OF THE DRAWINGS

Fig. 1 is a view showing the general configuration of an electric power steering system of the present invention;

Fig. 2 is a schematic view for describing the manner in which torque develops along the way from a tread to a steering wheel;

Fig. 3 is a view showing a relationship between self aligning torque and lateral force determined from a traveling direction and slip angle of tires;

Fig. 4 is a view showing a relationship between the point of application of lateral force and a trail;

Fig. 5 is a graph showing a change in lateral force and a change in self aligning torque in response to a change in slip angle;

Fig. 6 is a graph showing a relationship between a computed value of self aligning torque SATa and an estimated value of self aligning torque SATb;

Fig. 7 is a block diagram showing the general configuration of a control unit of a first embodiment;

Fig. 8 is a flowchart showing example processing procedures of the control unit of the first embodiment;

Fig. 9 is a block diagram showing the general configuration of a control unit of a second embodiment;

Fig. 10 is a flowchart showing example processing procedures of the control unit of the second embodiment;

Fig. 11 is a block diagram showing the general configuration of a control unit of a third embodiment;

Fig. 12 is a flowchart showing example processing procedures of the control unit of the third embodiment;

Fig. 13 is a plot showing a relationship between a steering angle "d" and an estimated self-aligning value SAT;

Fig. 14 is a block diagram showing another example control unit of the present invention;

Fig. 15 is a view showing a grip loss level plotted on the graph representing the relationship between the slip angle and the torque, by comparison between SATa and SATb;

Fig. 16 is a block diagram showing an example configuration of an electric power steering system of the present invention;

Fig. 17 is a view showing an example characteristic of a corrected steering torque computing section;

Fig. 18 is a flowchart showing example control operation of the present invention;

Fig. 19 is a block diagram showing another example configuration of the electric power steering system of the present invention;

Fig. 20 is a block diagram showing yet another example configuration of the electric power steering system of the present invention; and

Fig. 21 a block diagram showing an example motor control system in a related-art electric power steering system.

DETAILED DESCRIPTION OF EXEMPLARY EMBODIMENTS OF THE INVENTION EMBODIMENTS

Embodiments of the present invention will be described hereunder by reference to the drawings.

The first through third embodiments relate to the first to eighth aspects of the invention, and the fourth embodiment relates to the ninth through twenty-second aspect of the invention.

[First Embodiment]

To begin with, a first embodiment will be described.

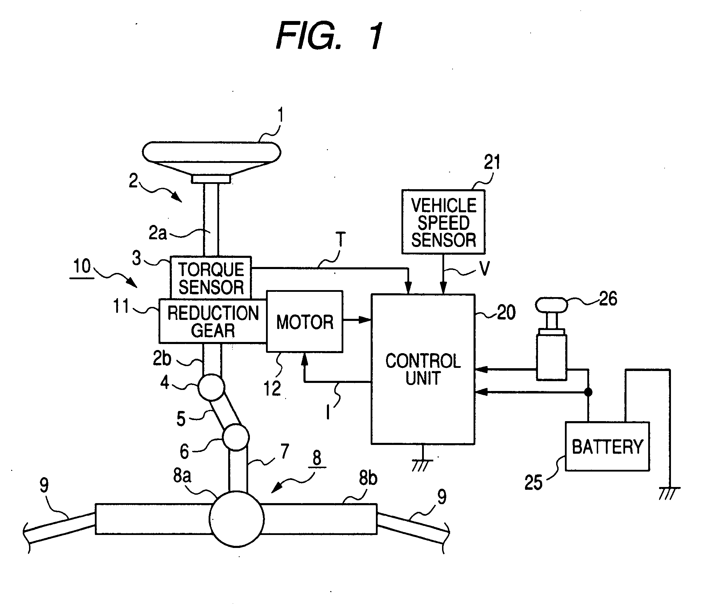

Fig. 1 is a block diagram of the entirety showing the first embodiment of the present invention.
In the drawing, reference numeral 1 designates a steering wheel. Steering force exerted on the steering wheel 1 by a driver is transmitted to a steering shaft 2 having an input shaft 2a and an output shaft 2b. In the steering shaft 2, one end of the input shaft 2s is coupled to the steering wheel 1, and the other end of the same is coupled to one end of the output shaft 2b by way of a torque sensor 3 which senses steering torque.

The steering force transmitted to the output shaft 2b is transmitted to a lower shaft 5 by way of a universal joint 4, and further to a pinion shaft 7 by way of a universal joint 6. The steering force transmitted to this pinion shaft 7 is transmitted to tie rods 9 by way of a steering gear 8, thereby steering unillustrated wheels. The steering gear 8 is formed into a rack-and-pinion structure including a pinion 8a liked to the pinion shaft 7 and racks 8b meshing with the pinion 8a; and transforms rotational movement transmitted to the pinion 8a into rectilinear motion by the racks 8b.

The output shaft 2b of the steering shaft 2 is joined to a steering assist mechanism 10 which transmits steering assist force to the output shaft 2b. This steering assist mechanism 10 is equipped with a reduction gear 11 joined to the output shaft 2b and an electricmotor 12 which is joined to this reduction gear 11, generates steering assist force, and is formed from, e.g., a brushless motor.
The torque sensor 3 is for detecting steering torque imparted to the steering wheel 1 and transmitted to the input shaft 2a. The torque sensor 3 is configured so as to transform; e.g., the steering torque, into a helix angle displacement of an unillustrated torsion bar interposed between the input shaft 2a and the output shaft 2b and to transform the helix angle displacement into a change in resistance or a magnetic change, thereby detecting the change in resistance or the magnetic change.

The steering torque T detected by this torque sensor 3 is input to a control unit 20 made up of, e.g., an MCU (Micro Controller Unit) for controlling a power steering system. Vehicle speed V detected by a vehicle speed sensor 21 is input to this control unit 20 too, and the control unit 20 computes a current command value Itv used for causing the electric motor 12 to generate steering assist force responsive to the steering torque T and the vehicle speed V. The control unit 20 also detects self aligning torque that is force for returning the steering wheel 1 to the neutral position; detects the degree of grip loss (hereinafter called a "grip loss level") of tires from the self aligning torque; and corrects the current command value Itv in accordance with the grip loss level and the angular speed $\omega$ of the electric motor 12, thereby acquiring a steering assist command value Im. A current value responsive to this steering assist command value Im is supplied to the electric motor 12, thereby generating steering assist force which is responsive to the steering torque T and the vehicle speed V and allows for the grip loss level and the angular speed $\omega$ of the electric motor 12; that is, steering angle speed.

This control unit 20 is supplied with power from a battery 25 and an ignition key signal in response to operation of an ignition key 26. Upon receipt of the ignition key signal, the control unit 20 starts computation of the steering assist command value Im.
The control unit 20 computes the grip loss level by following procedures provided below.

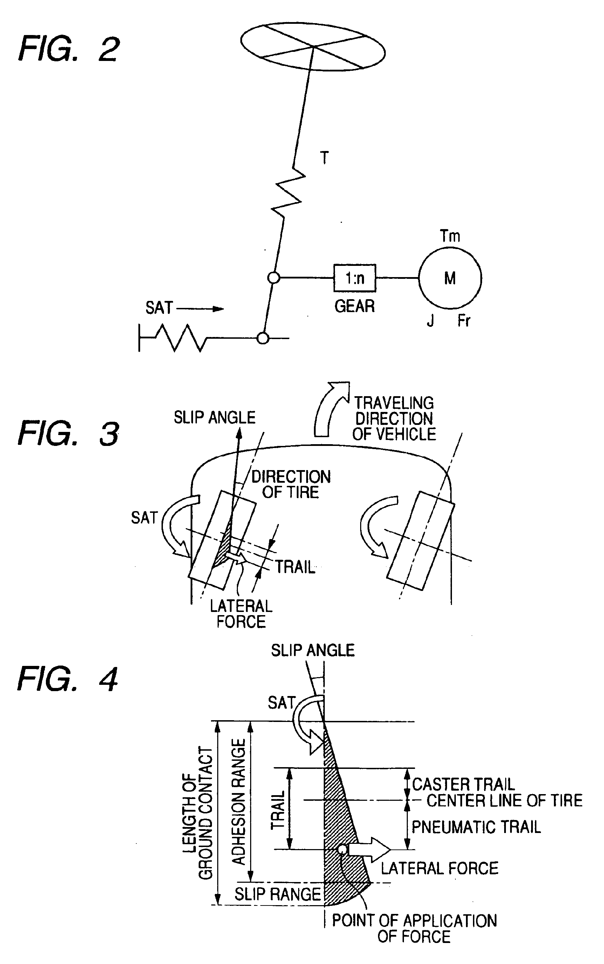

Self aligning torque (hereinafter also called "SAT") is force which returns the steering wheel to a neutral position. As shown in Fig. 2, as a result of the driver operating the steering wheel, steering torque T develops, and the electric motor M generates assist torque Tm in accordance with the steering torque T. Consequently, wheels are steered, and SAT arises in a rack shaft joined to the wheels as external force (reaction force) induced by the tires. At that time, torque which acts as resistance to operation of the steering wheel is generated by the inertia J and frictional force (static frictional force) Fr of the electric motor M. In the light of a balance between the forces, an equation of motion, Mathematical Expression (1), provided below is obtained.

Reference symbol $\omega$ in Mathematical Expression (1) designates angular speed of the electric motor M; and $\omega'$ designates angular acceleration of the electric motor M.

$$J \bullet \omega' + Fr \bullet sign(\omega) + SAT = Tm + T \quad (1)$$

Mathematical Expression (1) is subjected to Laplace transform while an initial value is set to zero, and the equation is solved for SAT, whereby Mathematical Expression (2) provided below is acquired. By this expression, SAT can be computed. Self aligning torque determined through Laplace transform is taken as a computed value SATa of self aligning torque.

$$SATa(s) = Tm(s) + T(s) - J \bullet \omega'(s) - Fr \bullet sign(\omega(s)) \quad (2)$$

Modeled vehicle motion in which tires rotate while sliding sideways is shown in Figs. 3 and 4.

Fig. 3 shows that lateral force developing in the entire treadof the tire comes into a laterally-deformed area (a hatched section) in the tread section and that SAT acts in a direction where a slip angle is reduced. Fig. 4 shows that a point of application of lateral force (the center point of the tread) is situated rearwardly with reference to the center line of the tire. The sum of the pneumatic trail and the caster trail corresponds to a trail.

From Figs. 3 and 4, SAT is understood to be the product (lateral force Fy $\times$ a trail) of lateral force Fy and the trail. On the assumption that the trail is taken as εn, SAT can be determined by Mathematical Expression (3) provided below. Self aligning torque computed by Mathematical Expression (3) is taken as an estimated value SATb of self aligning torque.

$$SATb = \varepsilon n \bullet Fy \quad (3)$$

Provided that a distance from the centroid to the rear wheels is L2 (a fixed value), the weight of a vehicle is "m," lateral acceleration is Gy, moment of inertia of the vehicle is Mo, a derivative value of a yaw rate γ is dγ/dt, and a wheel base is L, lateral force Fy can be determined by Mathematical Expression (4) provided below.

$$Fy = (L2 \bullet m \bullet Gy + Mo \bullet \frac{d\gamma}{dt}) \Big/ L \quad (4)$$

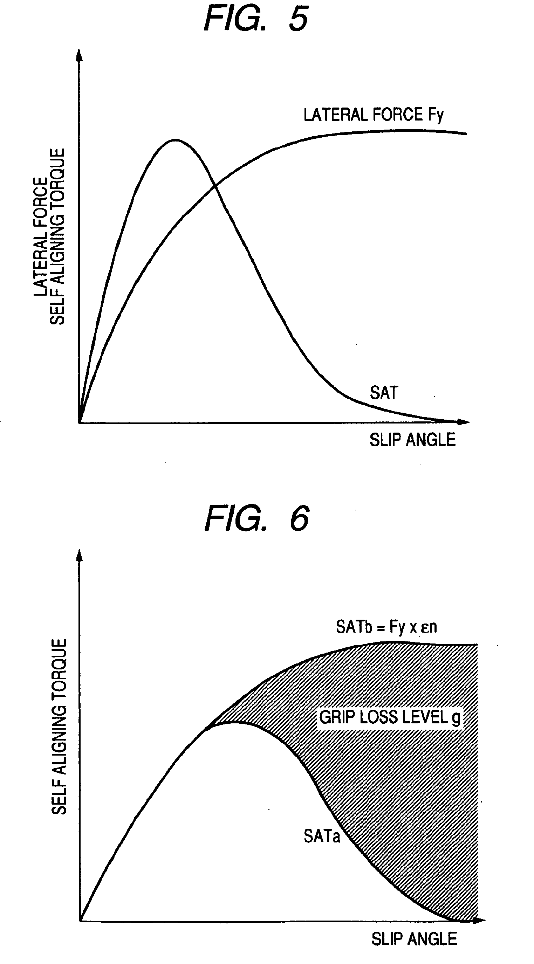

Meanwhile, Fig. 5 is a plot showing a characteristic of lateral force Fy and a characteristic of SAT with respect to a slip angle, and lateral force Fy and SAT exhibit nonlinear characteristics with respect to the slip angle. Since SAT corresponds to the product of lateral force Fy and the trail and since the caster trail is a fixed value, the nonlinear characteristic of SAT with respect to lateral force Fy directly represent a change in the pneumatic trail. Further, the characteristic of SAT with respect to lateral force is caused by an increase in sliding range shown in Fig. 4 and a decrease in pneumatic trail.

Moreover, SAT is the product of lateral force Fy and the trail; the sliding range does not increase in the linear region; and the pneumatic trail is a fixed value. Therefore, lateral force Fy is illustrated as in Fig. 6 by the sum of the pneumatic trail and the caster trail in the linear region; namely, the trail εn, as an estimated SAT value SATb in agreement with the dimension of SAT.

So long as the pneumatic trail is constant, the computed SAT value SATa and lateral force Fy (corresponding to the estimated SAT value SATb) follow the same path. However, when the sliding range is increased and the pneumatic trail is decreased, a difference arises between the computed SAT value SATa and lateral force Fy. This difference represents the grip loss level. This difference is taken as a "grip loss level" in the present invention. By Mathematical Expression (5) provided below, the computed SAT value SATa computed according to Mathematical Expression (2) is compared with the estimated SAT value SATb computed according to Mathematical Expression (3).

$$g = SATb - SATa \quad (5)$$

"g" computed by Mathematical Expression (5) corresponds to a grip loss level, and the grip loss level of the vehicle can be estimated by this grip loss level "g."
Fig. 6 is a plot showing the computed SAT value SATa and the estimated SAT value SATb (lateral force Fy when the trail εn is constant) in a compared manner; namely, the manner in which SAT is being lost as the slip angle increases. That difference between the computed SAT value SATa and the estimated SAT value SATb which is determined by Mathematical Expression (5) is indicated as a grip loss level "g" (a hatched section in the drawing).

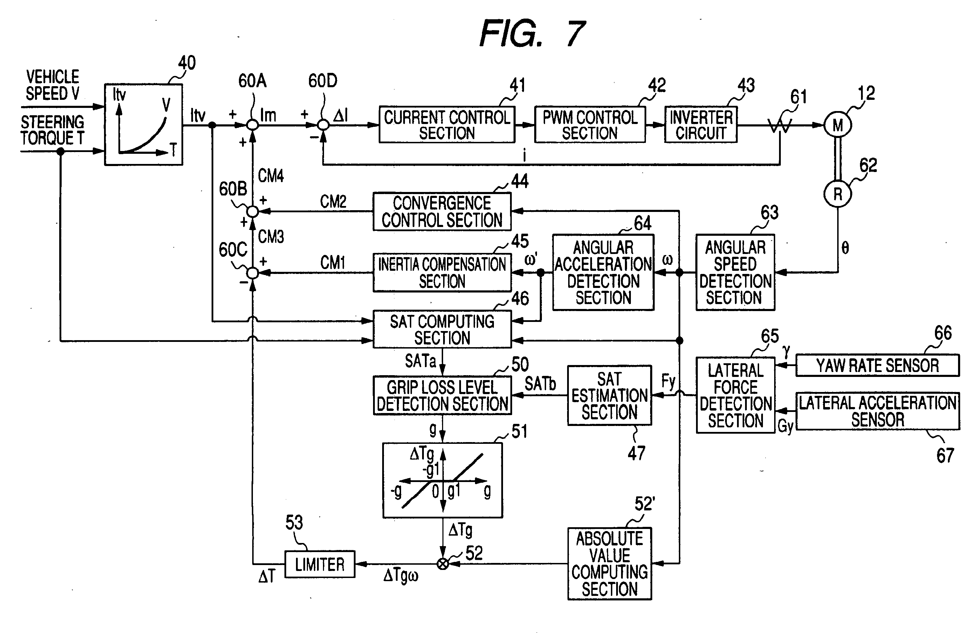

Next, the functional configuration of the control unit 20 is described. Fig. 7 is a block diagram showing an example functional configuration of the control unit 20. The steering torque T from the torque sensor 3 is input to a command value computing section 40 and an SAT computing section 46; the vehicle speed V from the vehicle speed sensor 21 is input to the command value computing section 40; and the command value computing section 40 computes a current command value Itv from the steering torque T and the vehicle speed V. The only requirement is that this current command value Itv be computed by following known procedures. For instance, settings are made according to a control map such that a greater value is acquired as the steering torque T becomes greater. The control map is switched according to vehicle speed, and settings are made such that the current command value Itv becomes smaller as the vehicle speed V becomes greater.

The current command value Itv computed by this command value computing section 40 is input to an SAT computing section 46 and an addition section 60A; and a result of addition performed by the addition section 60A is input additionally as a steering assist command value Im to a subtraction section 60D. Feedback of the motor current value "i" detected by a motor current detector 61 is supplied to the subtraction section 60D. A deviation (Im-i) between the steering assist command value Im and the motor current value "i"-which is determined by the subtraction section 60D-is input as a current command value ΔI to the current control section 41. The current control section 41 subjects the current command value ΔI to processing such as PI control, or the like. The PWM control section 42 further subjects the thus-processed current command value to PWM signal processing, and a motor 12 is driven by an inverter circuit 43.

The motor 12 is provided with a rotation sensor 62, such as a resolver, a hall element, or the like. An angle θ of the electric motor 12 detected by the rotation sensor 62 is input to an angular speed detection section 63. The angular speed detection section 63 detects, from the angle θ, angular speed ω. The angular speed ω is input to a convergence control section 44, an angular acceleration detection section 64, and the absolute value computing section 52' as well as to the SAT computing section 46. Angular acceleration ω' detected by the angular acceleration detection section 64 is input to the SAT computing section 46 and an inertia compensation section 45. A convergence control signal CM2 from the convergence control section 44 is input additionally to an addition section 60B, and an inertia compensation signal CM1 from the inertia compensation section 45 is input additionally to a subtraction section 60C.

The SAT computing section 46 computes a computed SAT value SATa according to Mathematical Expression (2). Specifically, the inertia J and static friction Fr of the motor 12 have been determined in advance as constants, and an SAT computation value SATa is computed from the steering torque T, the angular speed ω and motor acceleration ω' of the electric motor 12, and the current command value Itv. The SAT computation value SATa computed by the SAT computing section 46 is input to a grip loss level detection section 50.

Moreover, according to Mathematical Expression (4), a lateral force detection section 65 computes lateral force Fy from the yaw rate γ from the yaw rate sensor 66 set in the vehicle and lateral acceleration Gy from a lateral acceleration sensor 67 provided in the vehicle. The thus-detected lateral force Fy is input to an SAT estimation section 47.

The SAT estimation section 47 estimates the estimated SAT value SATb by use of the lateral force Fy and a trail εn previously determined by experiment, or the like, according to Mathematical Expression 3.

According to Mathematical Expression (5), the grip loss level detection section 50 determines the grip loss level "g" from the computed SAT value SATa determined by the SAT computing section 46 and the SAT estimated value SATb determined by the SAT estimation section 47. The grip loss level "g" is input to a torque correction value computing section 51.

This torque correction value computing section 51 detects from the grip loss level "g" a torque correction value ΔTg for use in correcting steering assist force by an amount corresponding to the grip loss level "g." This torque correction value ΔTg is set to a corresponding torque value which enables avoidance of grip loss, which would otherwise be caused when steering or steering assist is performed while grip loss corresponding to the grip loss level "g" is taking place, by correcting the current command value Itv so as to become smaller by use of the torque correction value ΔTg. For instance, as shown in a plot in a block 51 shown in Fig. 7, when the grip loss level "g" falls within a dead zone close to a value of zero; namely, a range from -g1 ≤ g ≤ g1, the torque correction value ΔTg is set to zero. When the grip loss level "g" is greater than g1, settings are made such that the torque correction value ΔTg becomes greater proportional to an increase in grip loss level "g." When the grip loss level "g" is smaller than -g1, settings are made such that the torque correction value ΔTg becomes greater in the negative direction proportional to a negative increase in grip loss level "g." The torque correction value ΔTg is input to a multiplication section 52.

This multiplication section 52 multiplies, by the torque correction value ΔTg corresponding to the grip loss level "g," the absolute value |ω| of the angular speed ω detected by the angular speed detection section 63 which is computed by an absolute value computing section 52', thereby computing a torque correction value ΔTgω allowing for the grip loss level "g" and the angular speed ω.

This torque correction value ΔTgω is input to a limiter 53. After having limited the absolute value |ΔTgω| of the torque correction value ΔTgω to the preset maximum value, the limiter 53 inputs, in a subtractive manner, the absolute value as the torque correction value ΔT to the subtraction section 60C.

The subtraction section 60C subtracts the torque correction value ΔT from the inertia compensation signal CM1 from the inertia compensation section 45. A result of subtraction CM3 is input to the addition section 60B, where the subtraction result CM3 is added to a convergence control signal CM2 from the convergence control section 44. A result of addition CM4 is input to the addition section 60A, where the addition result CM4 is added to the current command value Itv, to thus produce a steering assist command value Im.

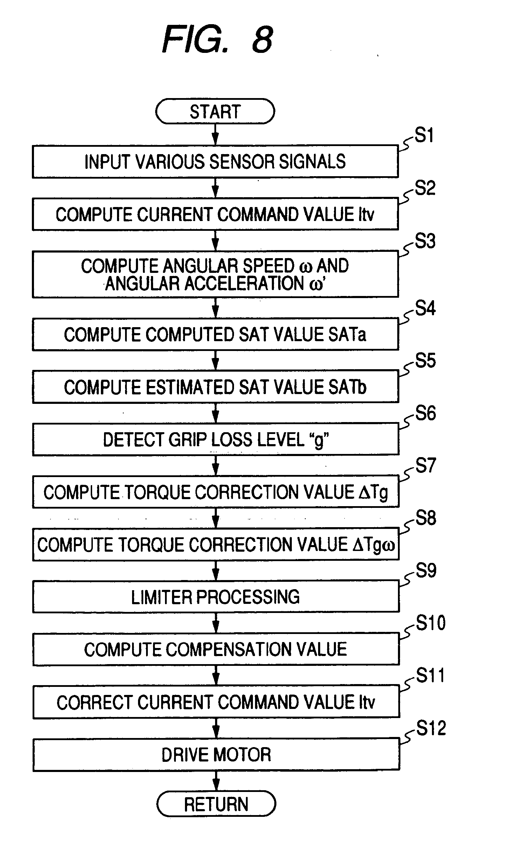

Operation performed by the control operation unit 20 will now be described by reference to a flowchart shown in Fig. 8.

First, the steering torque T from the torque sensor 3, the vehicle speed V from the vehicle speed sensor 21, the yaw rate γ from the yaw rate sensor 66, lateral acceleration Gy from the lateral acceleration sensor 67, and an angle θ from the rotational sensor 62 are input (step S1). Next, the command value computing section 40 computes the current command value Itv responsive to the steering torque T and the vehicle speed V from the input steering torque T and the vehicle speed V (step S2). The angular speed detection section 63 detects the angular speed $\omega$ of the electric motor 12 from the angle $\theta$ from the rotation sensor 62, and the angular acceleration detection section 64 detects angular acceleration $\omega$' (step S3).

Next, the SAT computing section 46 computes an SAT computation value SATa from the steering torque T, the current command value Itv, the angular speed $\omega$, and the angular acceleration $\omega$' (step S4). Subsequently, the lateral force detection section 65 computes lateral force Fy from the yaw rate $\gamma$ and the lateral acceleration Gy, and the SAT estimation section 47 estimates the estimated SAT value SATb from lateral force Fy (step S5).

Subsequently, the grip loss level detection section 50 detects the grip loss level "g" from a deviation between the computed SAT value SATa and the estimated SAT value SATb (step S6). From the grip loss level "g," the toque correction value computing section 51 computes a torque correction value $\Delta$Tg corresponding to the grip loss level "g" (step S7). Further, the multiplication section 52 multiplies the torque correction value $\Delta$Tg by the absolute value of the angular speed $\omega$ computed by the absolute value computing section 52', thereby computing a torque correction value $\Delta$Tg$\omega$ which becomes greater when the absolute value of the grip loss level "g" is greater than the absolute value |g1| and whose absolute value becomes greater when the absolute value of the angular speed $\omega$ becomes greater (step S8) . The limiter 53 limits this torque correction value Tg$\omega$, thereby computing the torque correction value $\triangle$T (step S9) .

Next, the inertia compensation section 45 computes the inertia compensation signal CM1, and the convergence control section 44 computes the convergence control signal CM2 (step S10). A value CM3 determined by subtracting the torque correction value $\Delta$T from the inertia compensation signal CM1 is added to the convergence control signal CM2, thereby acquiring the result of addition CM4. This result of addition CM4 is input to the addition section 60A. The addition section 60A adds the current command value Itv computed by the command value computing section 40 to the result of addition CM4, thereby correcting the current command value Itv (step S11). This corrected current command value is taken as a steering assist command value Im, and the electric motor 12 is driven in accordance with the steering assist command value Im (step S12) .

Consequently, so long as the grip loss has not come about or the grip loss level "g" assumes a value falling within the dead zone, the torque correction value $\Delta$Tg is set essentially to zero. Therefore, the torque correction value $\Delta$T assumes a value of essentially zero regardless of the magnitude of the angular speed $\omega$, and the current command value Itv is not corrected. Therefore, steering assist force responsive to the steering torque T and the vehicle speed V is generated, so that the driver's steering action can be assisted unerringly.

When the grip loss level is increased from this state, the torque correction value $\Delta$Tg computed by the torque corrected value computing section 51 is increased correspondingly. This torque correction value $\Delta$Tg is corrected so as to become greater as the angular speed $\omega$ of the electric motor 12 becomes greater, whereby the torque correction value $\Delta$T is computed. The current command value Itv is corrected so as to become smaller by an amount corresponding to the torque correction value $\Delta$T, whereby the steering assist command value Im is computed. The electric motor 12 is driven in accordance with the thus-computed steering assist command value Im. Therefore, when compared with the case where grip loss has not taken place, steering assist force that is reduced by an amount corresponding to the torque correction value $\Delta$T is generated, so that the steering assist force is suppressed. In consequence, the driver becomes less likely to perform steering in a direction where the steering wheel is steered much; namely, the driver is prevented from operating the steering wheel in excess of the grip force, thereby reliably preventing the behavior of the vehicle from becoming unstable, which would otherwise be caused as a result of loss of grips.

Now, the grip loss level "g" is computed from the deviation between the estimated SAT value SATb determined from the lateral force Fy developing in the vehicle and the computed SAT value SATa detected from the steering torque T, the assist torque Tm, and the angular speed $\omega$ and angular acceleration $\omega$' of the electric motor 12. When grips have been lost, response of self aligning torque to grip loss is faster than response of the yaw rate to the grip loss. Therefore, a change in grip loss level can be detected, by computing a grip loss level through use of self aligning torque, in an early phase when compared with the case where a grip loss level is computed by use of a yaw rate. Consequently, a grip status can be detected more accurately by computing a change in grip loss level by use of self aligning torque. The current command value Itv is corrected according to the thus-detected grip status, and steering assist force is diminished, whereby steering assist force can be generated more accurately. Excessive steering responsive to a grip loss level is avoided, and occurrence of unstable behavior of the vehicle, which would otherwise be caused as grip loss, can be prevented reliably. Thus, the driving stability of the vehicle can be enhanced.

Moreover, the torque correction value $\Delta$T is computed from the angular speed $\omega$ of the electric motor 12 as well as from the grip loss level; in other words, the grip loss level is set in accordance with the steering speed of the driver. The torque correction value $\Delta$T is computed so as to assume a greater value as the angular speed $\omega$ of the electric motor 12 becomes greater; namely, as the steering speed of the driver becomes greater. Hence, as the possibility of the steering speed of the driver leading to excessive steering is greater, the steering assist force is made smaller, thereby making additional steering harder. As a result, grip loss can be avoided more reliably; namely, the driving stability of the vehicle can be enhanced.

As mentioned previously, when the grip loss level assumes a value falling within the range of the dead zone, the correction command value Itv is not corrected, and steering assist force responsive to the steering torque T and the vehicle speed V is generated. Steering assist force is reduced without regard to the state where grips are not lost or where the grip loss level is comparatively small, to thus produce no adverse effect. Imparting of unpleasant sensation to the driver attributable to a failure to generate sufficient steering assist force can be avoided.

The torque sensor 3 corresponds to a steering torque detection unit; processing pertaining to step S2 shown in Fig. 8 corresponds to current command value computing unit; processing for computing the angular speed $\omega$ of the electric motor in step S3 corresponds to steering angle speed detection means; processing pertaining to steps S4 to S6 corresponds to grip loss level detection unit; processing pertaining to steps S7 to S11 corresponds to correction unit; and processing pertaining to steps S2 to S11 corresponds to steering assist command value computing unit.

Further, processing pertaining to step S4 corresponds to an SAT computing section; processing pertaining to step S5 corresponds to an SAT estimation section; processing for computing lateral force in step S5 corresponds to a lateral force detection section; and processing pertaining to step S6 corresponds to a grip loss level detection section.

[Second Embodiment]

A second embodiment of the present invention will now be described.

The second embodiment is analogous to the first embodiment, except for the configuration of the control unit 20 being different, and hence the same reference numerals are assigned to the same sections, and their detailed explanations are omitted.

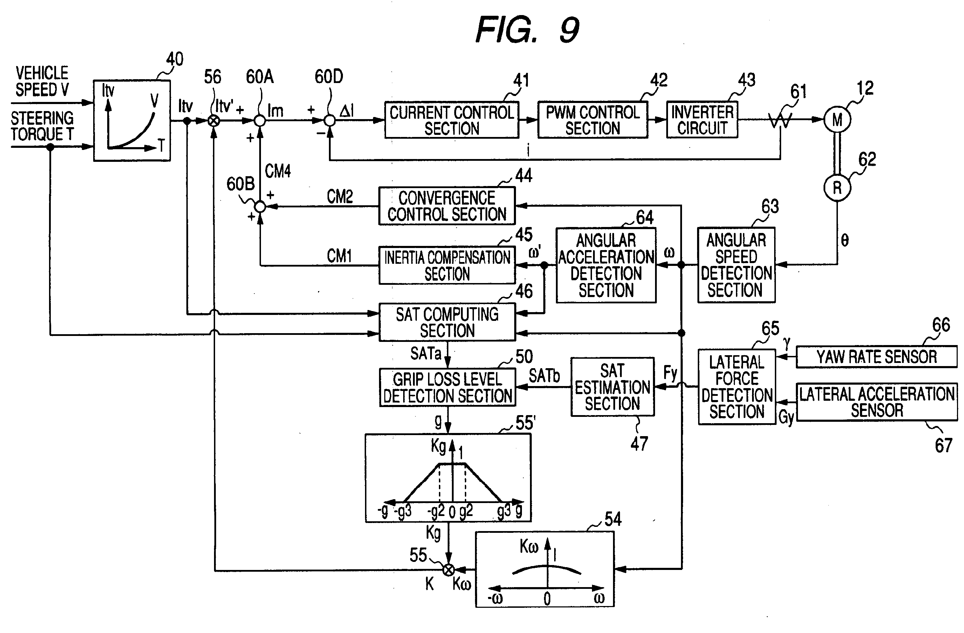

Fig. 9 is a block diagram showing the schematic configuration of the control unit 20 of the second embodiment.

In the control unit 20 of the second embodiment, the current command value Itv computed by the command value computing section 40 is input to the multiplication section 56, where the current command value is multiplied by a correction coefficient K to be described later, to thus compute a corrected current command value Itv′. This corrected current command value Itv′ is input to the addition section 60A. The addition section 60B adds the convergence control signal CM2 computed by the convergence control section 44 to the inertia compensation signal CM1 computed by the inertia compensation section 45. The result of addition CM4 is input to the addition section 60A, where the result of addition CM4 and the corrected current command value Itv' are added together, thereby computing the steering assist command value lm. The electric motor 12 is driven in accordance with the steering assist command value Im.

The grip loss level "g" detected by the grip loss level detection section 50 is input to a grip loss level coefficient computing section 55', where a grip loss level coefficient Kg corresponding to the grip loss level "g" is computed. As shown in a plot in a block 55' shown in Fig. 9, when the grip loss level "g" falls within the range of a dead zone; namely, the grip loss level "g" satisfies a range from $-g2 \leq g \leq g2$, the grip loss level coefficient K is set to one. When the grip loss level "g" is outside the dead zone, the grip loss level coefficient Kg decreases reversely when the absolute value |g| of the grip loss level "g" is greater than |g2|. When the absolute value |g| of the grip loss level "g" is equal to or greater than the absolute value |g3| of a threshold value g3, the grip loss level coefficient Kg is set to zero. Thus, the grip loss level coefficient Kg computed by the grip loss level coefficient computing section 55' is input to the multiplication section 55. The grip loss level coefficient Kg and the angular speed coefficient K$\omega$ computed by the angular speed coefficient computing section 54 are input to this multiplication section 55.

The angular speed coefficient computing section 54 computes the angular speed coefficient K$\omega$ corresponding to the angular speed $\omega$ detected by the angular speed detection section 63. As indicated by a plot provided in a block 54 shown in Fig. 9, when the angular speed $\omega$ is zero, the angular speed coefficient K$\omega$ is set to one. The angular speed coefficient K$\omega$ is set so as to become smaller than one as the absolute value of the angular speed $\omega$ becomes greater. Thus, the angular speed coefficient K$\omega$ computed by the angular speed coefficient computing section 54 is input to the multiplication section 55.

The multiplication section 55 multiplies the grip loss level coefficient Kg computed by the grip loss level coefficient computing section 55' by the angular speed coefficient K$\omega$ computed by the angular speed coefficient computing section 54, and a result of multiplication is input as a corrected coefficient K to the multiplication section 56.

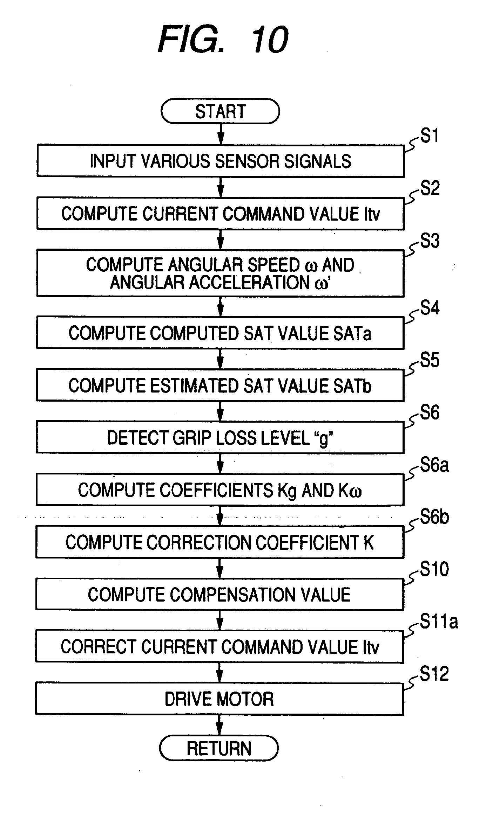

Operation performed by the control unit 20 of the second embodiment will now be descried by reference to the flowchart shown in Fig. 10.

Sections which are identical with those of the first embodiment shown in Fig. 8 in terms of processing are assigned the same reference numerals, and their detailed descriptions are omitted.

First, the steering torque T, the vehicle speed V, the yaw rate $\gamma$, lateral acceleration Gy, and an angle $\theta$ of the electrical motor 12 from various sensors are input (step S1). The current command value Itv responsive to the steering torque T and the vehicle speed V is computed (step S2). The angular speed $\omega$ and angular acceleration $\omega'$ of the electric motor 12 are detected from the angle $\theta$ of the electric motor 12 (step S3).

Next, the SAT computation value SATa is detected from the steering torque T, the current command value Itv, the angular speed ω, and the angular acceleration ω' (step S4). Subsequently, the lateral force Fy is detected from the yaw rate γ and the lateral acceleration Gy, thereby detecting an estimated STA value STAb (step 5).

Subsequently, the grip loss level "g" is detected from the computed SAT value SATa and the estimated SAT value SATb (step 6). The grip loss level coefficient computing section 55' computes the grip loss coefficient Kg responsive to the grip loss level "g, " and the angular speed coefficient computing section 54 computes the angular speed coefficient Kω responsive to the angular speed ω (step S6a) . The multiplication section 55multiplies these coefficients, to thus compute the correction coefficient K (step S6b). When the grip loss level "g" falls within the dead zone, the grip loss level coefficient Kg is set to one. Accordingly, the correction coefficient K is determined in accordance with the angular speed ω. When the angular speed ω assumes a value close to zero, the angular speed coefficient Kω is set to a value close to one. Therefore, the correction coefficient K is set to a value close to one. The greater the absolute value of the angular speed ω, the smaller the correction coefficient Kω. Accordingly, the correction coefficient K also decreases. When the grip loss level coefficient "g" assumes a value falling outside the dead zone. The grip loss level coefficient Kg is set to a smaller value as the absolute value of the grip loss level "g" becomes greater. Accordingly, the correction coefficient K decreases. The correction coefficient K is set to a smaller value as the angular speed ω becomes greater.

The inertia compensation signal CM1 and the convergence control signal CM2 are computed (step S10). The multiplication section 56 multiplies the current command value Itv responsive to the steering torque T and the vehicle speed Vby the correction coefficient K, to thus produce a corrected current command value Itv' . The addition section 60A adds the inertia compensation signal CM1 and the convergence control signal CM2 to the corrected current command value Itv' (step S11a). The electric motor 12 is driven in accordance with the resultantly-acquired steering assist command value Im (step S12).

Consequently, when the grip loss has not taken place or the grip loss level "g" assumes a value falling within the dead zone, the grip loss level coefficient Kg assumes a value of one. Since the correction coefficient K is determined from the angular speed coefficient Kω, the correction coefficient K is set to a value close to one when the angular speed ω assumes a value close to zero. The current command value Itv is not corrected much. Therefore, steering assist force essentially responsive to the steering torque T and the vehicle speed V is generated, whereby the driver's steering action can be assisted unerringly. When the absolute value of the angular speed ω has become great in this state, the correction coefficient K decreases from one, and hence the current command value Itv is reduced. When the grip loss level has increased from this state, the grip loss level coefficient Kg decreases correspondingly. Further, the angular speed coefficient Kω decreases as the angular speed ω becomes greater. Therefore, the correction coefficient K assumes a smaller value as the grip loss level" g" becomes greater. The correction coefficient K also assumes a smaller value as the angular speed ω becomes greater. Therefore, the current command value Itv is corrected to a smaller value as the grip loss level and the angular speed ω become greater. The electric motor 12 is driven in accordance with the steering assist command value Im.

Consequently, the steering assist force is limited to a smaller value as the grip loss level and the angular speed ω of the electric motor 12 become greater, thereby making it difficult for the driver to steer the steering wheel much. Hence, the driver can be prevented from steering the steering wheel in excess of grip force, and occurrence of unstable behavior of the vehicle, which would otherwise be caused by grip loss, can be avoided.

Even in this case, a working-effect equal to that achieved in the first embodiment can be yielded. Moreover, the grip loss level coefficient Kg is provided with a dead zone. Hence, reduction of steering assist force, which would otherwise be caused regardless of a small grip loss level and nonoccurrence of grip loss, can be avoided. Processing pertaining to steps S6a to S11a shown in Fig. 10 corresponds to correction unit, and processing pertaining to steps S2 to S11a corresponds to steering assist command value computing unit.

[Third Embodiment]

A third embodiment of the present invention will now be described.

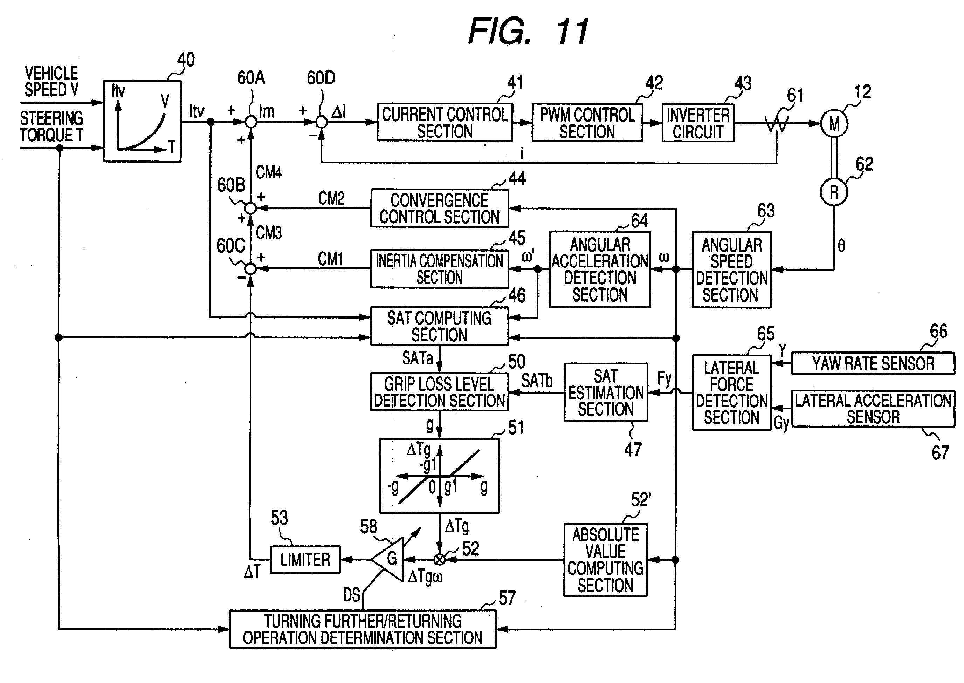

This third embodiment is identical with the first embodiment except that the third embodiment is provided with a turning further/returning operation determination section (steering direction determination unit) 57 and a gain section 58 for multiplying a gain responsive to a result of determination rendered by the turning further/returning operation determination section 57. Hence, like sections are assigned like reference numerals, and their detailed explanations are omitted. Fig. 11 is a block diagram showing the general configuration of the control unit 20 of the third embodiment.

In the control unit 20 of the third embodiment, that torque correction value ΔTg responsive to the grip loss level "g" computed by the torque correction value computing section 51 is input to the multiplication section 52, where the torque correction value is multiplied by the absolute value of the angular speed ω of the electric motor 12. A result of multiplication is input to the gain section 58. The angular speed ω of the electric motor 12 detected by the angular speed detection section 63 and the steering torque T are input to the turning further/returning operation determination section 57. The turning further/returning operation determination section 57 determines, from the steering torque T and the angular speed ω of the electric motor 12, whether turning further operation or returning operation is performed on the steering wheel. The torque sensor 3 is configured so as to impart a sign to the steering torque T in such a way that torque resulting from right steering is taken as a positive value and torque resulting from left steering is taken as a negative value and to output the steering torque having a sign. Likewise, the angular speed detection section 63 of the electric motor 12 imparts a sign according to a rotating direction of the electric motor 12. For example, in the case of a rotating direction in which steering assist force is imparted at the time of right steering, angular speed is output as a positive value. In the case of a rotating direction in which steering assist force is imparted at the time of left steering, angular speed is output as a negative value. The turning further/returning operation determination section 57 determines operation of the steering wheel as turning further operation when the angular speed $\omega$ of the electric motor 12 and the steering torque T has the same sign; namely, a positive sign or a negative sign. When the angular speed $\omega$ of the electric motor 12 and the steering torque T have different signs, the turning further/returning operation determination section 57 determines operation of the steering wheel as returning operation.

The case where a determination is made as to whether the operation of the steering wheel is turning further operation or returning operation according to the steering torque T and the angular speed $\omega$ of the electric motor 12 has been described. However, the present invention is not limited to such a configuration. For instance, as described in JP-A-2003-170856, operation of the steering wheel may also be determined as returning operation only when the sign of the steering torque T and the sign of the rate of change in steering torque are different from each other and when the absolute value of the rate of change in steering torque is equal to or more than a predetermined value. In this case, a determination can be made, by only the steering torque value T, as to whether the operation of the steering wheel is turning further operation or returning operation, without using the angular speed $\omega$. When having made a determination as to whether the operation of the steering wheel is turning further operation or returning operation, the turning further/returning operation determination section 57 outputs a determination signal DS to the gain section 58.

This gain section 58 switches a gain in accordance with the determination signal DS from the turning further/returning operation determination section 57. When the determination signal DS shows turning further operation, a gain $G_H$ is multiplied by the torque correction value $\Delta Tg\omega$, and a result of multiplication is output to the limiter 53. When the determination signal DS shows returning operation, a gain $G_L$ smaller than the gain $G_H$ is multiplied by the torque correction value $\Delta Tg\omega$, and a result of multiplication is output to the limiter 53.

The torque correction value $\Delta T$ limited by the limiter 53 is input, in a subtractive manner, into the subtraction section 60C. The torque correction value $\Delta T$ is subtracted from the inertia correction value CM1 computed by the inertia compensation section 45. The result of addition CM4 produced by addition of the result of computation CM3 to the convergence control signal CM2 is added to the current command value Itv, to thus compute the steering assist command value Im. The electric motor 12 is driven in accordance with the steering assist command value.

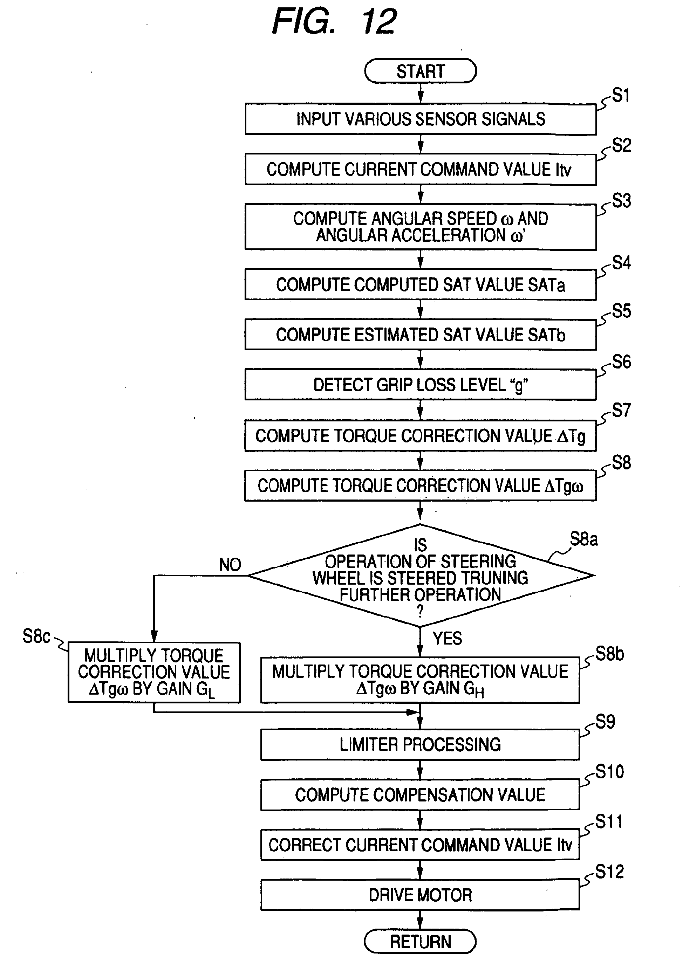

Consequently, as shown in the flowchart of Fig. 12, the control unit 20 of the third embodiment performs processing pertaining to steps S1 through S8 by following the same procedures as those described in connection with the first embodiment, whereby a torque correction value $\Delta Tg\omega$ responsive to the grip loss level "g" and the absolute value of the angular speed $\omega$ of the electric motor 12 is computed. Subsequently, the turning further/returning operation determination section 57 renders a determination (step S8a). In the case of turning further operation, the torque correction value $\Delta Tg\omega$ is multiplied by the gain $G_H$ (step S8b) . In the case of returning operation, the torque correction value $\Delta Tg\omega$ is multiplied by the gain $G_L$ smaller than the gain $G_H$ (step S8c). The torque correction value $\Delta Tg\omega$ multiplied by the gain is subjected to limiter processing in the limiter 53, whereby the torque correction value $\Delta T$ is computed (step S9). The inertia compensation signal CM1 and the convergence control signal CM2 are computed (step S10), and the torque correction value $\triangle T$ is subtracted from the inertia compensation signal CM1. The result of addition CM4 produced by addition of the result of subtraction to the convergence control signal CM2 is added to the current command value Itv (step S11) . In accordance with the steering assist command value Im produced as a result of addition, the electric motor 12 is driven (step S12).

Consequently, in the third embodiment, the torque correction value $\Delta T$ is made different between the turning further operation and the returning operation. The gain yielded at the time of turning further operation is greater than the gain yielded at the time of returning operation; namely, the torque correction value $\Delta T$ assumes a greater value in the case of turning further operation. As a result, steering assist force becomes smaller. Conversely, at the time of returning operation, the torque correction value $\Delta T$ assumes a smaller value, the amount of reduction in steering assist force is small, so that a certain amount of steering assist force is generated. Therefore, at the time of turning further operation, the steering assist force is sufficiently diminished, to thus pose difficulty in performance of turning further operation and reliably avoid occurrence of grip loss. At the time of returning operation, sufficient steering assist force is generated, to thus perform sufficient steering assist. Rapid returning operation of the steering wheel 1 to its neutral position, which would otherwise be caused by a reduction in steering assist force, is avoided. Moreover, imparting of unpleasant sensation to the driver attributable to a reduction in steering assist force can be avoided.

The third embodiment has described the case where the torque correction value $\Delta T$ is changed between the turning further operation and the returning operation in the first embodiment. However, the third embodiment can also be applied to the second embodiment. In this case, the only requirement is that the correction coefficient K be multiplied by the gain $G_H$ or the gain $G_L$ according to whether the operation of the steering wheel is the turning further operation or the returning operation and that the result of multiplication is further multiplied by the current command value Itv. Even in this case, an equivalent working-effect can be yielded.

Each of the embodiments has described the case where the angular speed ω of the electric motor 12 is used as a value equivalent to the steering speed of the steering wheel 1 and where steering assist force is corrected in accordance with the angular speed ω and the grip loss level "g." However, the steering shaft 2 may also be equipped with a steering angular speed sensor for detecting steering angular speed, and a detection signal from this steering angular speed sensor may also be used. Alternatively, the steering shaft 2 may also be provided with a steering angle sensor for detecting a steering angle, and a detection signal from this steering angle sensor may be subjected to time differentiation, to thus compute steering angular speed. The thus-computed steering angular speed may also be used.

Each of the embodiments has described the case where the lateral force Fy is estimated from the yaw rate γ, the lateral acceleration Gy and the vehicle motion model and where self aligning torque actually acting on the vehicle is estimated from the lateral force Fy. However, it may also be the case where the hub, or the like, is provided with a lateral force sensor; that lateral force is detected directly by the lateral force sensor; and that the estimated SAT value SATb is computed by use of the thus-detected lateral force.

Moreover, self aligning torque may also be estimated from the vehicle motion model achieved in a horizontal plane, the vehicle speed V, the steering angle "d" and without use of the lateral force Fy.

In short, a relationship among the yaw rate γ, the slip angle β, the vehicle speed V, and the steering angle "d" can be expressed by Mathematical Expressions (6) and (7) provided below.

$$mV\frac{d\beta}{dt} = -(mV + \frac{K_f L_f - K_r L_r}{V})\gamma - (K_f + K_r)\beta + K_f \delta_f \dots \quad (6)$$

$$I\frac{d\gamma}{dt} = -\frac{K_f L_f^2 + K_r L_r^2}{V}\gamma + (-K_f L_f + K_r L_r)\beta + K_f L_f \delta_f \dots \quad (7)$$

InMathematicalExpressions (6) and (7), reference symbol "m" designates the mass of a vehicle; I designates inertia moment around the Z axis passing through the centroid of the vehicle; L designates a wheel base (L = Lf + Lr), Lf and Lr designate horizontal distances from the front and rear wheel shafts to the centroid; Kf and Kr designate cornering power of respective front and rear tires; "n" designates an overall steering gear ratio; $\delta_f$ designates an actual steering angle of the front wheels; β designates a slip angle of the centroid of the vehicle; V designates vehicle speed; and γ designates a yaw rate.

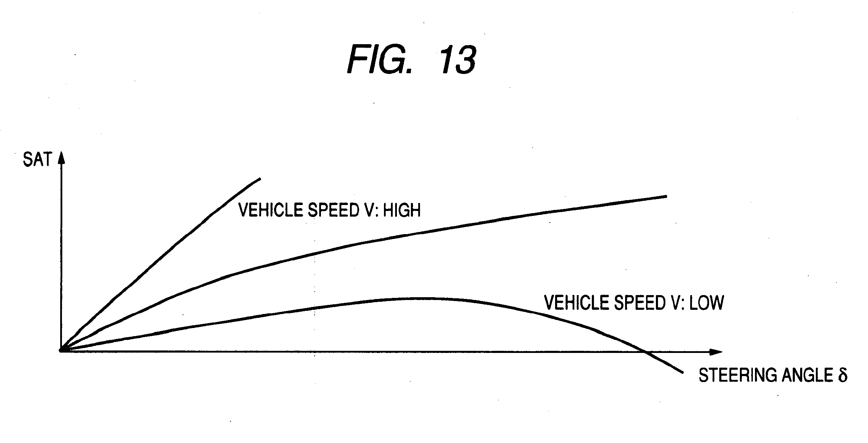

Self aligning torque can be expressed as the function of the yaw rate γ and the slip angle β. Hence, so long as the yaw rate γ and the slip angle β are merged as the function of the vehicle speed V and the steering angle "d," an estimated SAT value SATb can be obtained. When SATb is determined from the vehicle speed V and the steering angle "d," the SATb is obtained as shown in Fig. 13. A characteristic value for each vehicle may be measured by test, and a characteristic may also be prepared through simulation by use of the vehicle motion model.

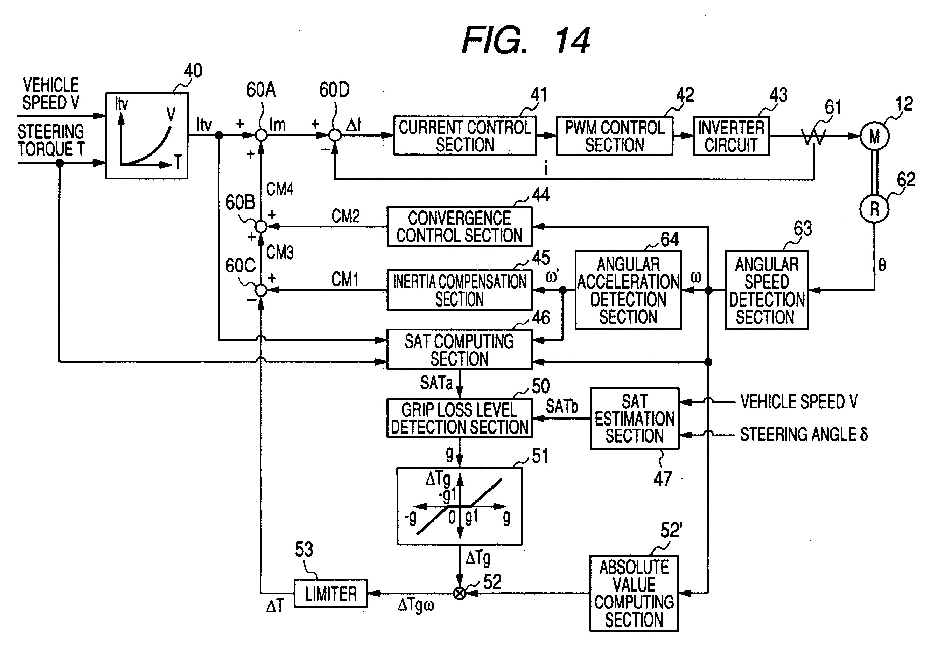

Consequently, in this case, the only requirement is, as shown in Fig. 14, that the vehicle speed V detected by the vehicle speed sensor (vehicle speed detection unit) 21 and the steering angle "d" detected by an unillustrated steering angle sensor (steering angle detection unit) be input to the SAT estimation section 47 and that the SAT estimation section 47 compute the estimated SAT value SATb according to a plot shown in Fig. 13.

[Fourth Embodiment]

Next, the fourth embodiment according to the ninth through twenty-second aspects of the invention will be described.

In a state where grips have not been lost significantly, the braking force/driving force controller can restore the behavior of the vehicle. Accordingly, the required role of steering is to return wheels from a state where grips have been significantly lost to a state where the braking force/driving force controller can restore the behavior of the vehicle.

On the premise of this role, the electric power steering system of the present invention is provided with an SAT detection section for detecting SAT from an equation of motion taking force balance into account; and an SAT estimation section for estimating SAT from a relationship between side force and a caster offset or from a vehicle speed and a steering angle. A grip loss level detection section compares the detected SAT value with the estimated SAT value (or side force), to thus detect the grip loss level on tires. Corrected steering torque is computed from the grip loss level; a corrected steering operation range is determined; and corrected steering torque is output in such a way that steering is returned in a direction in which grips of tires are restored, thereby performing correction. Thus, even when grips of tires have been lost, the wheels can be returned to a grip status where the behavior of the vehicle can be restored, and steering can be performed while the behavior of the vehicle remains stabilized.

The fourth embodiment of the present invention will be described hereunder by reference to the drawings.

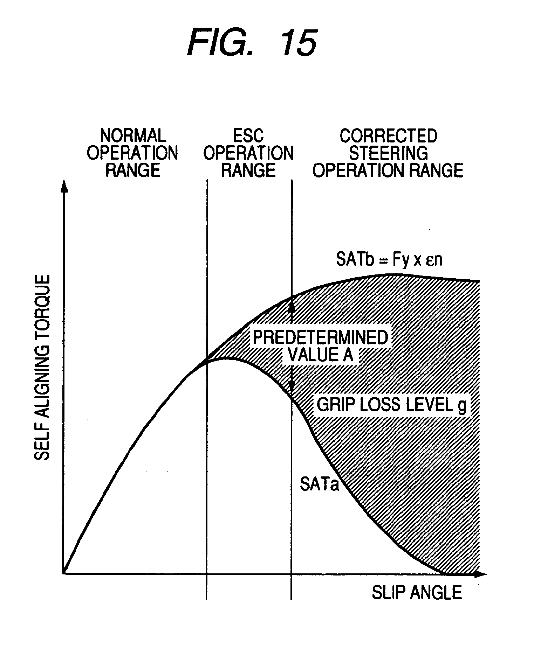

When the grip loss level "g" is equal to or greater than a predetermined value, grips of the tires are determined to be significantly lost. Subsequently, a current command value must be imparted so as to urge steering in a direction in which the grips of the tires are recovered. For this reason, there is set a predetermined value A for use in performing controlling by distinction, in accordance with the magnitude of the detected grip loss level "g," among a normal operation range where steering assist is performed normally, an ESC operation range where the behavior stability of the vehicle is controlled by ESC or VSC, and a corrected steering operation range where the behavior stability of the vehicle is controlled by corrected steering torque. In a vehicle power steering system using ESC or VSC, the ESC operation range and the corrected steering operation range are distinguished from each other, as shown in Fig. 15, by the grip loss level "g" and the predetermined value A. When the grip loss level "g" is smaller than the predetermined value A, the grip loss level is determined to fall within the normal operation range or the ESC operation range, and normal steering assist is performed or control is performed by a motion controller such as ESC, VSC, or the like. When the grip loss level "g" is equal to or greater than the predetermined value A, the grip loss level is determined to fall within the corrected steering operation range, and steering in the direction where grips of the tires are recovered is urged. Specifically, corrected steering torque is computed in such a way that the detected grip loss level "g" is returned to the ESC or VSC operation area, and the thus-computed steering torque is output.

From the above descriptions, in the fourth embodiment of the present invention, a current command value used for performing corrected steering is corrected in accordance with the grip loss level "g".

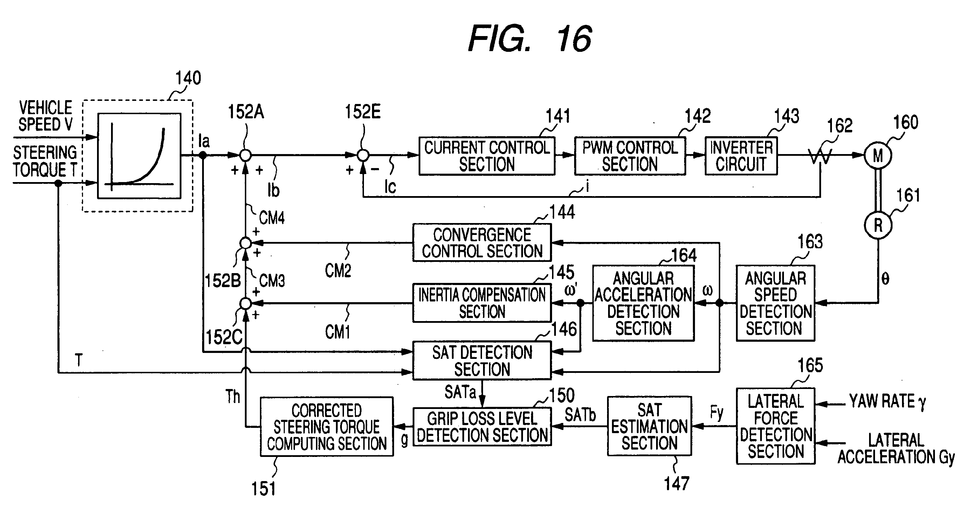

An example configuration of the fourth embodiment of the present invention will now be described by reference to Fig. 16.

First, the steering torque T from the torque sensor 3 is input to a steering assist command value computing section 140 and an SAT detection section 146; the vehicle speed V from the vehicle speed sensor 21 is input to the steering assist command value computing section 140; the steering assist command value computing section 140 computes a current command value Ia from the steering torque T and the vehicle speed V; the thus-computed current command value Ia is input to an SAT detection section 146 and an addition section 152A; and a current command value Ib which is a result of addition performed by the addition section 152A is input additionally to a subtraction section 152E. Feedback of the motor current value "i" detected by a motor current detector 62 is supplied to the subtraction section 152E. A deviation (Ib-i) determined by the subtraction section 152E is input as a current command value Ic to the current control section 141. The current control section 141 subjects the current command value Ic to processing such as PI control, or the like. The PWM control section 142 subjects the thus-processed current command value to PWM signal processing, and a motor 12 is driven by an inverter circuit 143.

The motor 12 is provided with a rotation sensor 161, such as a resolver, a hall element, or the like. An angle $\theta$ from the rotation sensor 161 is input to an angular speed detection section 163. The angular speed detection section 163 detects, from the angle $\theta$, angular speed $\omega$, and the angular speed $\omega$ is input to the SAT detection section 146, a convergence control section 144, and an angular acceleration detection section 164. Angular acceleration $\omega'$ detected by the angular acceleration detection section 164 is input to the SAT detection section 146 and an inertia compensation section 145. A convergence control signal CM2 from the convergence control section 144 is input to an addition section 152B, and an inertia compensation signal CM1 from the inertia compensation section 145 is input to an addition section 152C.

The SAT detection section 146 detects SAT according to Mathematical Expression 2. Specifically, the inertia J and static friction Fr of the motor M have been determined in advance as constants, and SAT is detected from the steering torque T, the motor angular speed $\omega$, the motor angular acceleration $\omega'$, and the current command value Ia. The SAT value SATa detected by the SAT detection section 146 is input to a grip loss level detection section 150.

Moreover, according to Mathematical Expression 4, a lateral force detection section 165 detects lateral force Fy in accordance with lateral acceleration Gy from a lateral acceleration sensor provided in the vehicle and the yaw rate $\gamma$ from the yaw rate sensor. The thus-detected lateral force Fy is input to an SAT estimation section 147, and the SAT estimation section 147 estimates the estimated SAT value SATb by use of the lateral force Fy and a trail $\varepsilon$n previously determined by experiment, or the like, according to Mathematical Expression 3.

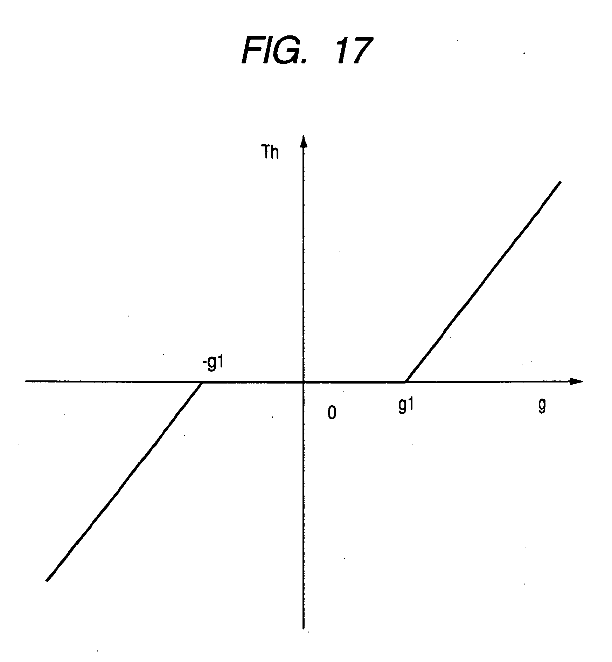

The grip loss level detection section 150 compares the SAT detected value SATa determined by the SAT detection section 146 with the SAT estimated value SATb determined by the SAT estimation section 147 according to Mathematical Expression 5, to thus determine the grip loss level "g." The grip loss level "g" is input to a corrected steering torque computing section 151. As shown in Fig. 17, the corrected steering torque computing section 151 sets thepredeterminedvalueAwhile taking a range from +g1 to -g1 as a dead zone. When the grip loss level "g" exceeds the upper limit g1 or the lower limit -g1, small corrected steering torque Th is computed when the grip loss level "g" is small. When the grip loss level "g" is large, large corrected steering torque Th is computed. The corrected steering torque Th is input to the addition section 152C, where the torque is added to the inertia compensation signal CM1 from the inertia compensation section 145. A result of addition CM3 is input to the addition section 152B, where the result is added to the convergence control signal CM2 from the convergence control section 144 . A correction signal CM4 which is a result of addition is input to the addition section 152A, thereby correcting the current command value Ia.

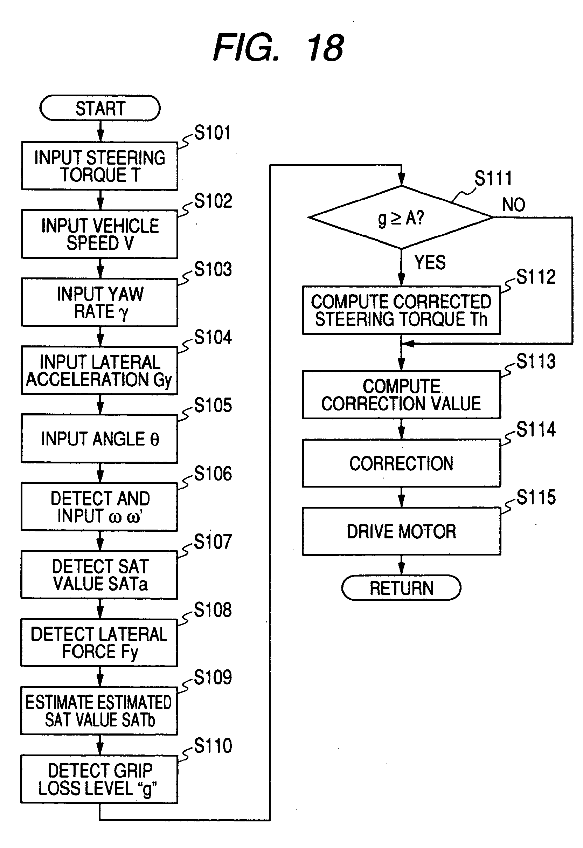

In such a configuration, operation of the electric power steering system will be described by reference to a flowchart shown in Fig. 18.

First, steering torque T is input (step S101); vehicle speed V is input (step S102); a yaw rate is input (step S103) ; and lateral speed is input (step S104) . Now, the input sequence of these pieces of information can be changed as required. The angle θ from the rotation sensor 161 is input (step S105); the angular speed detection section 163 detects angle speed ω; the angular acceleration detection section 164 detects angular acceleration ω'; and these sets of data are input (step S106). The SAT detection section 146 detects the detected SAT value SATa from the steering torque T, the vehicle speed V, the angular speed ω, and the angular acceleration ω' (step S107). In according with the yaw rate and lateral acceleration, the lateral force detection section 165 detects lateral force Fy (step S108), and the SAT estimation section 147 detects the estimated SAT value SATb (step S109).

Next, the grip loss level detection section 150 detects the grip loss level "g" from the detected SAT value SATa and the estimated SAT value SATb (step S110), and determines whether or not the grip loss level "g" is equal to or greater than the predetermined value A (step S111). When the grip loss level "g" is equal to or greater than the predetermined value A, the grip loss level falls within the corrected steering operation range. Hence, the corrected steering torque Th is computed and output in accordance with a characteristic equation, such as that shown in Fig. 16 (step S112) . The inertia compensation signal CM1 and a compensation value for the convergence control signal CM2 are computed (step S113). Results of computation are added to the current command value Ia, thereby correcting the current command value (step S114). Thus, the motor is driven (step S115) .

When the grip loss level "g" is determined to be smaller than the predetermined value A in step S111, the corrected steering torque Th is not computed and not output, and normal steering or ESC steering is performed.

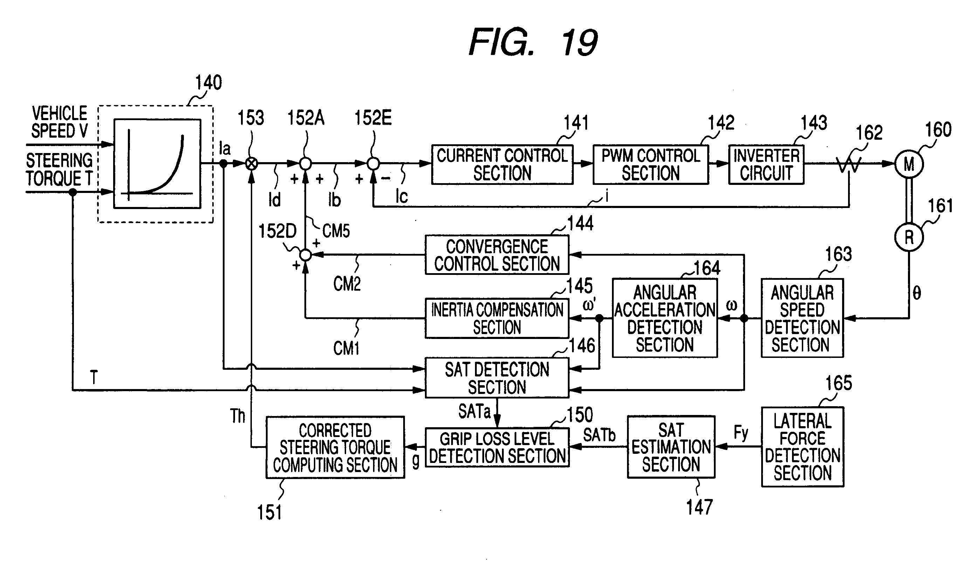

Fig. 19 is a block diagram showing another example configuration of the present invention in correspondence to Fig. 16. In the present example, the corrected steering torque Th from the corrected steering torque computing section 151 is input to a multiplication section 153. The multiplication section 153 multiplies the current command value Ia by the corrected steering torque Th, and the thus-multiplied current command value Id is input to the addition section 152A. Further, the inertia compensation signal CM1 and the convergence control signal CM2 are added in the addition section 152D, and an added correction signal CM5 is input to the addition section 152A, where the correction signal is added to the current command value Id. The motor 12 is driven in accordance with the current command value Ib which is a result of addition.

Even in such a configuration, the current command value Ia can be corrected by the corrected steering torque Th, and hence an analogous advantage can be yielded.

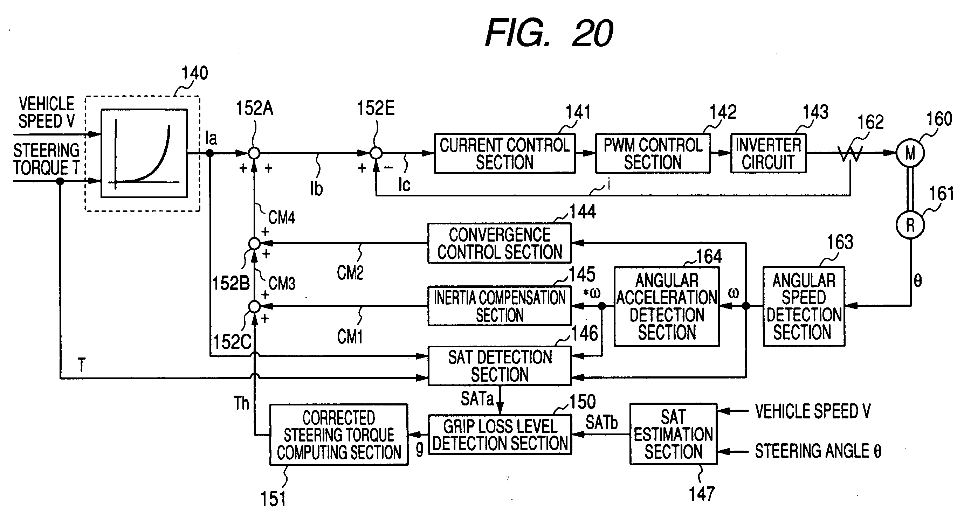

In thepreviously-described embodiment,thelateralforce Fy is estimated from the yaw rate γ, the lateral acceleration Gy, and the vehicle motion model. SAT is estimated from the lateral force Fy. Likewise, SAT can also be estimated by use of a vehicle motion model, vehicle speed V, and the steering angle θ which are acquired in a horizontal plane. An embodiment of this case corresponds to a configuration shown in Fig. 20, and the SAT estimation section 147 determines the estimated SAT value SATb from the vehicle speed V and the steering angle θ, and inputs the estimated SAT value SATb to the grip loss level detection section 150.

Herein, a relationship between the yaw rate γ, the slip angle β, the vehicle speed V, and the steering angle θ is expressed by the above described Mathematical Expression 6.
When the estimated SAT value SATb is determined from the vehicle speed V and the steering angle θ, a result is acquired as shown in Fig. 13. Characteristic values for each vehicle are measured by tests, and the characteristic may also be prepared through simulation and by use of a vehicle motion model.

As in the previously-described embodiment, the difference between the estimated SAT value SATb estimated from the vehicle motion model and the detected SAT value SATa detected as external force acting on the rack shaft shows the loss of assumed grips in the vehicle motion model. Therefore, the degree of grip loss of the vehicle can be acquired. When the loss of grips of the vehicle has been detected, an assist is imparted in the direction where the grips are recovered (i.e., the direction in which the slip angle decreases), so that the behavior of the vehicle can be stabilized.

The lateral force detection section 165 may also be a lateral force sensor provided on a hub, or the like and input the measured lateral force Fy to the SAT estimation section 147. In the above descriptions, the estimated SAT value SATb and the detected SAT value SATa are compared with each other on the assumption that the trail εn changes. However, when the trail εn is constant, the grip loss level "g" can be determined from the detected SAT value SATa and the trail εn. Moreover, in the examples shown in Figs. 17 and 19, a compensation system is formed from the convergence control section 144 and the inertia compensation section 145. However, in the embodiment of the present invention, these are not always indispensable.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. A controller for an electric power steering apparatus comprising:

   a steering torque detection unit that detects steering torque input into a steering mechanism of a vehicle, and a steering assist command value computing unit that computes a steering assist command value from the steering torque, wherein
   the controller drives a motor imparting assist force to the steering mechanism based in accordance with the steering assist command value, and
   the steering assist command value computing unit comprises:

   a steering angular speed detection unit that detects steering angular speed of a steering wheel;
   a grip loss level detection unit that detects a grip loss level representing amount of grip loss of tires;
   a current command value computing unit that computes a current command value for the motor from the steering torque;
   a correction unit that corrects the computed current command value from the detected steering angular speed and the detected grip loss level so as to make thus corrected current command value as the steering assist command value.

2. The controller for the electric power steering apparatus according to claim 1, wherein the correction unit corrects the current command value in such a way that:

   the steering assist command value becomes smaller as the grip loss level and the steering angular speed become greater.

3. The controller for the electric power steering apparatus according to claim 1, wherein the correction unit performs:

   computing a correction value for correcting the current command value in accordance with the grip loss level;
   multiplying thus computed correction value by the steering angular speed;
   subtracting thus obtainedmultiplication from the current command value; and
   outputting thus subtracted value as the steering assist command value.

4. The controller for the electric power steering apparatus according to claim 1, wherein

   a grip loss coefficient is set to be smaller as the grip loss level becomes greater,
   an angular speed coefficient is set to be smaller as the steering angular speed becomes greater,
   the correction unit performs:

   multiplying the grip loss coefficient by the angular speed coefficient to thus compute a correction coefficient;
   multiplying the correction coefficient by the current command value; and
   outputting thus multiplied value as the steering assist command value.

5. The controller for the electric power steering apparatus according to claim 1, further comprising:

   steering direction determination unit that determines whether or not operation of the steering wheel is turning further operation or returning operation, wherein,
   when the steering direction determination unit has determined that the operation is turning further operation, the correction unit corrects the current command value in such a way that the steering assist command value becomes smaller when compared with a case where the operation is determined to be returning operation.

**6.** The controller for the electric power steering apparatus according to claim 1, wherein

the steering mechanism comprises a rack connected to a tie rod which steers a wheel; and
the grip loss level detection unit comprises

a self alignment torque (SAT) computing section that computes external force arising in the rack, as a self aligning torque computed value;
an SAT estimation section that estimates self aligning torque generated on a road surface from a vehicle motion model as an estimated self aligning torque value; and
a grip loss level detection section that computes the grip loss level from a deviation between the computed self-aligned torque value and the estimated self aligning torque value.

**7.** The controller for the electric power steering apparatus according to claim 1, wherein

the steering mechanism comprises a rack connected to a tie rod which steers a wheel; and
the grip loss level detection unit comprises:

a self alignment torque (SAT) computing section that computes external force arising in the rack as a self aligning torque computed value;
a lateral force detection section that detects lateral force acting on the vehicle; and
a grip loss level detection section that detects the grip loss level from the computed self aligning torque value and the detected lateral force.

**8.** The controller for the electric power steering apparatus according to claim 6, further comprising:

a vehicle speed detection unit that detects a vehicle speed; and
a steering angle detection unit that detects a steering angle of the steering wheel, wherein
the SAT estimation section substitutes the detected vehicle speed and the detected steering angle into the vehicle motion model, to thus estimate the estimated self-aligning value.

**9.** An electric power steering system, which computes a current command value in accordance with steering torque of a vehicle and controls a motor imparting assist force for assisting steering operation based on the current command value, the electric power steering system comprising:

a self alignment torque (SAT) detection section that detects external force arising in a rack shaft of the vehicle as a self aligning torque value;
a SAT estimation section that estimates self aligning torque which is generated on a road surface from a vehicle model;
a grip loss level detection section that detects a grip loss level representing degree of grip loss of tires from the detected self aligning torque value and the estimated self aligning torque value; and
a corrected steering torque computing section that computes corrected steering torque from the grip loss level so that the current command value is corrected by the corrected steering torque.

**10.** An electric power steering system, which computes a current command value in accordance with steering torque of a vehicle and controls a motor imparting assist force for assisting steering operation based on the current command value, the electric power steering system comprising:

a self alignment torque (SAT) detection section that detects external force arising in a rack shaft of the vehicle as a self aligning torque value;
a lateral force detection unit that detects lateral force of the vehicle;
a grip loss level detection section that detects a grip loss level representing degree of grip loss of tires from the detected self aligning torque value and the detected lateral force; and
a corrected steering torque computing section that computes corrected steering torque from the detected grip loss level so that the current command value is corrected by the corrected steering torque.

**11.** The electric power steering system according to claim 10, wherein the lateral force detection unit detects the lateral force at a hub unit which supports a wheel of the vehicle.

**12.** The electric power steering system according to claim 10, wherein the lateral force detection unit detects the lateral force from a yaw rate and lateral acceleration of the vehicle.

**13.** The electric power steering system according to claim 9, wherein the corrected steering torque is output so as to urge steering of the steering wheel in a direction where the grips of the tires are recovered.

**14.** The electric power steering system according to claim 10, wherein the corrected steering torque is output so as to urge steering of the steering wheel in a direction where the grips of the tires are recovered.

**15.** The electric power steering system according to claim 9, wherein the corrected steering torque computing section compares the grip loss level with a predetermined value, and outputs the corrected steering torque.

**16.** The electric power steering system according to claim 10, wherein the corrected steering torque computing section compares the grip loss level with a predetermined value, and outputs the corrected steering torque.

**17.** The electric power steering system according to claim 9, wherein the grip loss level and the corrected steering torque have a proportional relationship.

**18.** The electric power steering system according to claim 10, wherein the grip loss level and the corrected steering torque have a proportional relationship.

**19.** The electric power steering system according to claim 9, wherein the corrected steering torque is added to the current command value.

**20.** The electric power steering system according to claim 10, wherein the corrected steering torque is added to the current command value.

**21.** The electric power steering system according to claim 9, wherein a corrected steering torque gain is computed from the grip loss level, and the corrected steering torque gain is multiplied by the current command value.

**22.** The electric power steering system according to claim 10, wherein a corrected steering torque gain is computed from the grip loss level, and the corrected steering torque gain is multiplied by the current command value.

# FIG. 1

# FIG. 2

# FIG. 3

# FIG. 4

## FIG. 5

LATERAL FORCE Fy

LATERAL FORCE
SELF ALIGNING TORQUE

SAT

SLIP ANGLE

## FIG. 6

$SATb = Fy \times \varepsilon n$

SELF ALIGNING TORQUE

GRIP LOSS LEVEL g

SATa

SLIP ANGLE

FIG. 7

# FIG. 8

START

INPUT VARIOUS SENSOR SIGNALS ——S1

COMPUTE CURRENT COMMAND VALUE Itv ——S2

COMPUTE ANGULAR SPEED ω AND ANGULAR ACCELERATION ω' ——S3

COMPUTE COMPUTED SAT VALUE SATa ——S4

COMPUTE ESTIMATED SAT VALUE SATb ——S5

DETECT GRIP LOSS LEVEL "g" ——S6

COMPUTE TORQUE CORRECTION VALUE ΔTg ——S7

COMPUTE TORQUE CORRECTION VALUE ΔTgω ——S8

LIMITER PROCESSING ——S9

COMPUTE COMPENSATION VALUE ——S10

CORRECT CURRENT COMMAND VALUE Itv ——S11

DRIVE MOTOR ——S12

RETURN

24

# FIG. 9

VEHICLE SPEED V

STEERING TORQUE T

40

Itv

56

60A

60D

41

CURRENT CONTROL SECTION

42

PWM CONTROL SECTION

43

INVERTER CIRCUIT

61

12

M

62

R

Itv

Itv'

+

Im

+

ΔI

+

−

i

θ

CM4

60B

+

CM2

44

CONVERGENCE CONTROL SECTION

63

ANGULAR SPEED DETECTION SECTION

+

CM1

45

INERTIA COMPENSATION SECTION

ω'

64

ANGULAR ACCELERATION DETECTION SECTION

ω

46

SAT COMPUTING SECTION

SATa

50

GRIP LOSS LEVEL DETECTION SECTION

SATb

47

SAT ESTIMATION SECTION

Fy

65

LATERAL FORCE DETECTION SECTION

γ

66

YAW RATE SENSOR

Gy

67

LATERAL ACCELERATION SENSOR

g

55'

Kg

1

-g -g3 -g2 0 g2 g3 g

Kg

54

Kω

1

-ω 0 ω

55

K

Kω

EP 1 880 921 A2

# FIG. 10

START

INPUT VARIOUS SENSOR SIGNALS — S1

COMPUTE CURRENT COMMAND VALUE Itv — S2

COMPUTE ANGULAR SPEED $\omega$ AND ANGULAR ACCELERATION $\omega'$ — S3

COMPUTE COMPUTED SAT VALUE SATa — S4

COMPUTE ESTIMATED SAT VALUE SATb — S5

DETECT GRIP LOSS LEVEL "g" — S6

COMPUTE COEFFICIENTS Kg AND K$\omega$ — S6a

COMPUTE CORRECTION COEFFICIENT K — S6b

COMPUTE COMPENSATION VALUE — S10

CORRECT CURRENT COMMAND VALUE Itv — S11a

DRIVE MOTOR — S12

RETURN

# FIG. 11

EP 1 880 921 A2

# FIG. 12

START

INPUT VARIOUS SENSOR SIGNALS — S1

COMPUTE CURRENT COMMAND VALUE Itv — S2

COMPUTE ANGULAR SPEED ω AND ANGULAR ACCELERATION ω' — S3

COMPUTE COMPUTED SAT VALUE SATa — S4

COMPUTE ESTIMATED SAT VALUE SATb — S5

DETECT GRIP LOSS LEVEL "g" — S6

COMPUTE TORQUE CORRECTION VALUE ΔTg — S7

COMPUTE TORQUE CORRECTION VALUE ΔTgω — S8

IS OPERATION OF STEERING WHEEL IS STEERED TRUNING FURTHER OPERATION ? — S8a

NO

YES

MULTIPLY TORQUE CORRECTION VALUE ΔTgω BY GAIN $G_L$ — S8c

MULTIPLY TORQUE CORRECTION VALUE ΔTgω BY GAIN $G_H$ — S8b

LIMITER PROCESSING — S9

COMPUTE COMPENSATION VALUE — S10

CORRECT CURRENT COMMAND VALUE Itv — S11

DRIVE MOTOR — S12

RETURN

# FIG. 13

SAT

VEHICLE SPEED V: HIGH

VEHICLE SPEED V: LOW

STEERING ANGLE δ

EP 1 880 921 A2

# FIG. 14

VEHICLE SPEED V

STEERING TORQUE T

40

Itv

V

T

Itv

60A  + Im

60D  + ΔI  −

CURRENT CONTROL SECTION  41

PWM CONTROL SECTION  42

INVERTER CIRCUIT  43

61

M  12

+

i

R  62

θ

CM4

60B  +

CM2

CONVERGENCE CONTROL SECTION  44

63

ANGULAR SPEED DETECTION SECTION

+

CM3

64

ANGULAR ACCELERATION DETECTION SECTION  ω

60C  +

CM1

INERTIA COMPENSATION SECTION  45  ω'

−

46

SAT COMPUTING SECTION

SATa

50

GRIP LOSS LEVEL DETECTION SECTION  SATb

47

SAT ESTIMATION SECTION

VEHICLE SPEED V

STEERING ANGLE δ

g

51

ΔTg

-g1

-g  0  g1  g

ΔTg

52

53

LIMITER

ΔT

ΔTgω

52'

ABSOLUTE VALUE COMPUTING SECTION

EP 1 880 921 A2

# FIG. 15

## FIG. 16

EP 1 880 921 A2

# FIG. 17

# FIG. 18

START

INPUT STEERING
TORQUE T — S101

INPUT VEHICLE
SPEED V — S102

INPUT YAW
RATE γ — S103

INPUT LATERAL
ACCELERATION Gy — S104

INPUT ANGLE θ — S105

DETECT AND
INPUT ω ω' — S106

DETECT SAT
VALUE SATa — S107

DETECT LATERAL
FORCE Fy — S108

ESTIMATE ESTIMATED
SAT VALUE SATb — S109

DETECT GRIP
LOSS LEVEL "g" — S110

g ≥ A? — S111

NO

YES

COMPUTE CORRECTED
STEERING TORQUE Th — S112

COMPUTE
CORRECTION VALUE — S113

CORRECTION — S114

DRIVE MOTOR — S115

RETURN

34

## FIG. 19

EP 1 880 921 A2

# FIG. 20

EP 1 880 921 A2

## FIG. 21

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006264392 A
- JP 2002369565 A
- JP 62116355 A

- JP 2005088648 A
- JP 2003170856 A